(19) Europäisches Patentamt

European Patent Office

Office européen des brevets

(11) **EP 1 580 986 A2**

(12) **EUROPEAN PATENT APPLICATION**

(43) Date of publication:
**28.09.2005 Bulletin 2005/39**

(51) Int Cl.⁷: **H04N 5/30**

(21) Application number: **05013420.4**

(22) Date of filing: **21.06.1996**

(84) Designated Contracting States:
**AT BE CH DE DK ES FI FR GB GR IE IT LI LU MC NL PT SE**

(30) Priority: **23.06.1995 US 494599**
**18.08.1995 US 516629**

(62) Document number(s) of the earlier application(s) in accordance with Art. 76 EPC:
**96923323.8 / 0 834 232**

(71) Applicant: **INTERACTIVE PICTURES CORPORATION**
**Knoxville, TN 37921 (US)**

(72) Inventors:
• **McCall, Danny A.**
**Knoxville, TN 37909 (US)**
• **Martin, H., Lee**
**Knoxville, TN 37922 (US)**

• **Jackson, Laban, Phelps**
**Knoxville, TN 37919 (US)**
• **Pecoraro, Alexis S.**
**Knoxville, TN 37922 (US)**
• **Hansen, Peter**
**Knoxville, TN 37909 (US)**
• **Bauer, Martin**
**Oak Ridge, TN 37830 (US)**

(74) Representative: **Williamson, Brian**
**OLSWANG**
**90 High Holborn**
**London**
**WC1V 6XX (GB)**

Remarks:
This application was filed on 22 - 06 - 2005 as a divisional application to the application mentioned under INID code 62.

(54) **Method and apparatus for creating spherical images**

(57) The present invention includes at least one camera (601) having a lens (602) with at least a 180 degree field-of-view for capturing a hemispherical image (603) corresponding to a mirror image of the hemispherical image (603) captured by the camera (601) and capturing the second image from a second camera. A converter combines (216) the two images along with their outside edges (207, 208) to form a single, spherical image (209). The apparatus for interactive display of any portion of a spherical image preferably comprises a digital processor apparatus (219) for storing digital data representative of at least one image having a 180 degree field-of-view. In order to view a selected image portion without warp or distortion at the seam between opposite hemispherical images, edge filtering is applied to eliminate a halo effect.

FIG. 1

**Description**

This application is a continuation-in-part of U.S. application serial No. 08/516,629, filed August 18, 1995, entitled "Method and Apparatus for the Interactive Display of Any Portion of a Spherical Image" of Laban P. Jackson, Alexis S. Pecoraro, Peter Hansen, Martin L. Bauer, and H. Lee Martin, which is a continuation-in-part of U.S. application serial no. 08/494,599, filed June 23, 1995, entitled "Method and Apparatus for Simultaneous Capture of a Spherical Image" of Danny A. McCall and H. Lee Martin, which is a continuation-in-part of a U.S. application serial number 08/386,912 filed February 8, 1995, which is a continuation of U.S. application serial number 08/339,663 filed November 11, 1994, which is a continuation of U.S. application serial number 08/189,585 filed January 31, 1994 (now U.S. Patent No. 5,384,588), which is a continuation-in-part of U.S. application serial number 08/014,508 filed October 25, 1994 (now U.S. Patent No. 5,359,063), which is a continuation-in-part of U.S. application serial number 07/699,366 filed May 13, 1991 (now U.S. Patent No. 5,185,667). This application is also a continuation-in-part of U.S. application serial number 08/373,446 filed January 17, 1995, which is a continuation-in-part of U.S. application serial no. 08/189,585 filed January 31, 1994 (now U.S. Patent No. 5,384,588).

**BACKGROUND OF THE INVENTION**

Technical Field

This invention relates generally to an apparatus and method for capturing an image having a spherical field-of-view and viewing the image. Specifically, one aspect of the present invention relates to a system involving a single camera having a lens with a field of view of at least 180° and associated method for capturing a first hemispherical image for subsequent combination into the spherical image. Alternatively, when the system comprises two cameras with such lenses mounted in a securely attached back-to-back arrangement, the capturing system and method captures two distinct hemispherical images for subsequent combination into the spherical image. One embodiment of the preferred capturing system includes a single-use, still image camera.

Additionally, another aspect of this invention relates generally to the field of image processing systems and, more particularly, to an apparatus and method for displaying a portion of a spherical image field that is created from one or two 180 degree hemispherical images, generated from either a still photograph or a motion picture or video input. Specifically, the second aspect of the present invention relates to a system where desired portions of one or two 180 degree images are used to create a dewarped and perspective-corrected window into the image or images. The viewing method involves the use of a mathematical transformation to remove distortion associated with a fisheye or other wide angle lens, correcting the perspective associated with changes in the direction of view, and selecting which hemisphere of the original images a given picture element resides. In addition, the viewing method creates an environment that totally fills a spherical environment resulting in no boundaries, thus, creating a so-called immersive image viewing experience. It does so preferably by combining two images into a complete sphere (i.e. permitting continuous navigation without any boundaries in the spherical image). The second image can be composed of a single half image with the second half composed of the mirror image of the first image or a second hemispherical image that is capture by a camera directed in the opposite direction of the first. The preferred system of the second aspect of the invention includes a computational device for implementation of the corrective algorithms (personal computer, TV settop device, or hardware for computation of the transformations), an input device (a computer mouse, touchscreen, keyboard or other input device), a display monitor (a television, computer monitor or other display device), and image data that is collected from either one or two 180 degree (for example, fisheye) images that are still, motion or video.

**Background Art**

**Image Capture**

The discussion of the background art related to the capturing aspect of the invention described herein relates to two subjects: spherical image capture and subsequent captured image transformations.

**Spherical Image Capture**

The goal of imaging technology is to make the observer feel as though he or she is part of the image. Prior art systems have partially accomplished this goal. Unfortunately, the ability of prior art systems to make the user feel part of the captured images are proportional to the cost of the image capture system.

Relating to inexpensive image capturing systems, camera companies have introduced disposable cameras. A disposable camera generally refers to a single-use camera that includes film, a lens, and a camera body, all in a single compact shell. The film includes either a single frame of film or multiple frames of film. After the entire roll of film has been exposed, the entire camera is returned for film developing. All the photographer receives back are the developed prints or slides. The manufacturer then recycles the parts from the returned camera, adds film, and ships the camera to a retailer for sale again. Disposable cameras come in various types including regular magnification cameras, telephoto cameras, water resistant cameras, and panoramic cameras.

Images captured by panoramic cameras provide wide angle horizontal images (left to right) but lack wide angle vertical images (up and down). Accordingly, while capturing a wide field-of-view on one plane (horizontal), the photographer loses the wide field-of-view on the other plane (vertical). Rotating the camera only alters the wide angle direction. The following example illustrates this shortcoming. Suppose a photographer desires to capture the grandeur of a dense forest from within the forest. While an image captured by a panoramic camera would include a sweeping cross section of trees (left to right), it would only include, at most, the middle portions of the nearest trees. To capture the forest floor and canopy, the photographer would have to take multiple panoramic photographs from looking almost straight down to looking straight up. The final image of the forest would then only be realized with the laborious task of manually cutting and pasting the different images together. Unfortunately, the left and right ends of the final image become distorted and cannot be easily resolved. The distortions created are similar to those encountered in map-making where one tries to represent a round earth on a flat map. Specifically, objects and relative distances near the extremes of the wide angle image become distorted. Additionally, this approach wastes film.

A slightly more complex panoramic camera employs a scanning drive mechanism which selectively exposes vertical strips of film as the camera scans from extreme to extreme. However, scanning panoramic cameras invariably introduce noise into captured images through vibrations generated from their scanning motions as well as take a relatively long period of time to capture the image.

Other wide-angle image capturing systems exist. For example, IMAX and 70 mm films provide high definition images on a large screen. However, these screens are flat. While a viewer can feel part of the scene when staring straight ahead, this feeling dissipates where the screen ends.

Another imaging system includes the OMNIMAX camera and projection system where an image was recorded and later projected on a spherical screen to produce an image 180 degrees wide, 100 degrees up from the horizon and 20 degrees below. While this system offers significant improvements over a flat screen projection system, the viewer's absorption into the displayed images is limited by the edges of the displayed image.

Another image capture and display system is U.S. Patent No. 5,023,725 to Mccutchen. McCutchen discloses a dodecahedral imaging system which breaks a sphere into 12 discrete polyhedrons. Each section has its own dedicated CCD camera. The images are captured and displayed on the walls of a hemispherical room. This system offers increased resolution through increasing the number of cameras used. However, as the number of cameras increase, the bulk of the imaging system likewise increases. Additionally, each camera has to be perfectly aligned with respect to the other cameras to adequately capture a spherical image. Using McCutcheon's system, increased resolution requires more bulk and more expense. Furthermore, the images of each camera are not integrated together. Accordingly, the system fails to account for the seams between the displayed images. While quickly moving images may mask these edge effects, the edge effects may be more noticeable with slow moving images.


**Captured Image Transformations**

Camera viewing systems are used in abundance for surveillance, inspection, security, and remote sensing. Remote viewing is critical, for example, for robotic manipulation tasks. Close viewing is necessary for detailed manipulation tasks while wide-angle viewing aids positioning of the robotic system to avoid collisions with the work space. Most of these systems use either a fixed-mount camera with a limited viewing field to reduce distortion, or they utilize mechanical pan-and-tilt platforms and mechanized zoom lenses to orient the camera and magnify its image. In the application where orientation of the camera and magnification of its image are required, the mechanical solution is large in size and can subtend a significant volume making the viewing system difficult to conceal or use in close quarters. Several cameras are usually necessary to provide wide-angle viewing of the work space.

In order to provide a maximum amount of viewing coverage or subtended angle, mechanical pan/tilt mechanisms usually use motorized drives and gear mechanisms to manipulate the vertical and horizontal orientation. An example of such a device is shown in U.S. Patent Number 4,728,839 issued to J.B. Coughlan, et al, on March 1, 1988. Collisions with the working environment caused by these mechanical pan/tilt orientation mechanisms can damage both the camera and the work space and impede the remote handling operation. Simultaneously, viewing in said remote environments is extremely important to the performance of inspection and manipulation activities.

Camera viewing systems that use internal optics to provide wide viewing angles have also been developed in order to minimize the size and volume of the camera and the intrusion into the viewing area. These systems rely on the movement of either a mirror or prism to change the tilt-angle of orientation and provide mechanical rotation of the entire camera to change the pan angle of orientation. Additional lenses are used to minimize distortion. Using this means, the size of the camera orientation system can be minimized, but "blind spots" in the center of the view result. Also, these systems typically have no means of magnifying the image and or producing multiple images from a single camera.

Further, references that may be relevant to the evaluation of the captured image transformations as described herein include U.S. Patent Numbers 4,772,942 issued to M. J. Tuck on September 20, 1988; 5,067,019 issued to R. D. Juday on November 19, 1991; and 5,068,735 issued to K. Tuchiya, et al on November 26, 1991.

**Image Viewing**

The discussion of the background art related to the viewing aspect of the invention described herein relates to immersive image viewing. "Immersive image viewing" as used in the context of this application means the concept of permitting a viewer to be totally immersed in an image by allowing the user, for example, to focus on a particular object in an object plane and selectively having that image displayed in an image plane without warping or distortion as if the user had seen the object with their eyes.

One goal of the present invention is to create an immersive image environment and another to provide a means for the user to experience such a totally immersive image environment, providing full freedom in the viewing direction inside of a complete sphere that is composed of one or two combined hemispherical images. As a result, there are no bounds on the user's freedom to view in any direction.

Some virtual reality approaches have been developed that use multiple images to capture a cylindrical representation of an environment from a composition of numerous still images (Apple Computer's QuickTimeVR) or a cylindrical image from a mechanized panoramic camera (Microsoft corporation's Surround). Apple's QuickTimeVR may be described by Chen et al., US patent no. 5,396,583. These methods suffer from at least two constraints: 1) the capture of the image requires precise methods and equipment not amenable to consumer application, and 2) the playback to the user is limited by the cylindrical composition providing a 360 degree panorama all the way around but a limited tilt in the vertical (up/down) direction.

In parent U.S. patent no. 5,185,667, an approach is described which uses a single image and allow navigations around the single image. The described method involves the capture of a single wide angle image (not a complete spherical image) and is thus limited in the effect on the user by having limits set at the edge of the wide angle field of view, thus constraining the user to a region of view direction.

Other methods (for example, a system under development at Minds Eye View of Troy, New York) are expected to use image projection to create alternative perspectives from dual fisheye images and process these images in a manual manner to create a composite of images that can be videotaped to create the sense of movement through environments. These alternative perspectives are combined, frame by frame, offline and, consequently, due to the computational complexity of the approach, real-time interaction has not been possible. This approach offers no interactive potential to allow the user to direct his own view and lacks accuracy at the seam between perspectives to automatically combine images without manual touch up of the original fisheye images.

Approximations based on bilinear interpolation (Tararine, U.S. Patent 5,048,102) as applied to a distorted image allow for computational speed increases, but are limited to a fixed viewing perspective and to a single source of input data (hemisphere) instead of an entire sphere of input for total immersion which requires additional logic to determine which source to obtain the information from.

Still other approaches provide a higher resolution in the video domain by combining numerous narrow angle imaging devices in an approximately seamless manner (McCutchen, U.S. Patent 5,023,725, described above), but these devices require the combination of numerous signals into a composite image and also are only piecewise continuous having issues at the intersection of various sensors (parallax).

**SUMMARY OF THE INVENTION**

**Objects of the Invention**

Accordingly, relating to image capture, it is an object of the present invention to provide an apparatus that captures at least one hemispherical image for later manipulation.

Relating to image capture, it is another object of the invention provide an apparatus which captures a spherical image from two images produced by two cameras.

Relating to image capture, it is a further object of the invention to provide a spherical image capture system and method without the bulk of a large number of cameras and the necessity of multiple camera alignment.

Relating to image capture, another object of the invention is to accomplish the above objectives using a single-use, disposable camera.

Relating to the combining aspect of the present invention, another object of the invention is to form a single spherical image from the captured image or images.

Relating to the combing aspect, another object of the invention is to reduce the number of seams in a formed image.

Relating to the viewing system, another object of the invention is to provide a system for displaying a complete spherical image with perspective correction and without edge effects and image distortion.

Relating to the viewing system, another object of the invention is to enable interaction with any portion of the spherical image with the selected portion being perspective corrected.

Relating to the viewing system, it is another object of the present invention to provide horizontal orientation (pan), vertical orientation (tilt) and rotational orientation (rotation) of the viewing direction with no moving mechanisms.

Relating to the viewing system, it is another object of the present invention to provide the ability to magnify or scale the image (zoom in and out) electronically.

Relating to the viewing system, it is another object of the present invention to provide electronic control of the image intensity (iris level).

Relating to the viewing system, it is another object of the present invention to be able to accomplish the above tranforms with simple inputs made by a lay person from a joystick, keyboard controller, or equivalent computer controlled means.

Relating to the viewing system, it is also an object of the present invention to provide accurate control of the absolute viewing direction and orientations using said input devices.

Relating to the viewing system, another object of the invention is to allow the placement of active areas ("hot spots") on the images that allow the sequencing of images or other information (text, video, audio, other spherical images) when activated by selection with the mouse or keyboard.

Relating to the viewing system, a further object of the present invention is to provide the ability to produce multiple images with different orientations and magnifications simultaneously from a single input image.

Relating to the viewing system, another object of the present invention is to be able to provide these images at real-time video rate, e.g. thirty transformed images per second, and to support various display format standards such as the National Television Standards Committee RS-170 signal format and/or higher resolution formats currently under development and to provide the images to a computer display performing perspective correction transforms on a personal computer system.

Relating to the viewing system, it is also an object of the present invention to provide a system than can be used for automatic or manual surveillance of selected environments, with optical views of these environments corrected electronically to remove distortion so as to facilitate this surveillance.

Relating to the viewing system, it is another object of this invention to provide a means for directly addressing each picture element of an analog image captured with an imaging device having a field-of-view, the picture elements being addressed in a non-linear sequence determined in a manner similar to that described by U.S. patent no. 5,185,667 to provide a distortion-corrected image without requiring the use of filters and memory holding buffers.

Relating to the viewing system, another object of the present invention is to provide a means for directly addressing each picture element of an image (still or video) captured using an imaging device having a two-dimensional field-of-view.

Relating to the viewing system, it is an object of the present invention to provide a method for interactive display of an image composed totally or in part from picture elements captured digitally from one or two fisheye images, still or full motion.

Another object of the invention is to provide the user with an input means to direct the image by use of a computer mouse, a keyboard, a touchscreen, and/or a joystick.

Relating to the viewing system, another object of this invention is to allow display of real-time full motion video directed at the discretion of the user.

Relating to the viewing system, another object of this invention is to allow display of high resolution still images directed at the discretion of the user.

Relating to the viewing system, another object of the invention is to allow combination of multiple image files sequentially to allow the user to navigate through images in a controlled sequence.

Incorporated in the present invention are the image capture and viewing systems of the following related patents and applications including: U.S. Application Serial No. 08/516,629, filed August 18, 1995; U.S. Application Serial No. 08/494,599, filed June 23, 1995; U.S. Application Serial No. 08/386,912 filed February 8, 1995; U.S. Application Serial No. 08/339,663 filed November 11, 1994; U.S. Application Serial No. 08/373,446 filed January 17, 1995; U.S. Patent No. 5,384,588; U.S. Patent No. 5,359,063; U.S. Patent No. 5,185,667; and U.S. Patent No. 5,384,588.

According to the principles of the present invention, at least one camera with a 180° or greater field-of-view lens captures a spherical image. When the system employs two cameras with such lenses, the cameras and lenses are mounted in a back-to-back arrangement. When used in this disclosure and attached claims, "back-to-back" means two cameras clasped together such that the image planes of the lenses fall between each of the lenses and both lenses' optical axes are collinear with a single line which passes through each lens and camera. An imaging element or elements capture the images produced by the lenses. When used herein and in the claims, an "imaging element" or "imaging elements" refer to both film and linear scanning devices and alternatives thereof upon which an image is focused and captured. The captured images from each camera are stored and combined to form a single, spherical image (a final, formed image). When used herein and in the claims, "stored" not only means to digitally store an image in a retrievable form but also means to capture the image on film. To form the spherical image, the system includes a converter which identifies, joins, and smooths the edges (also referred to as the "seams") of each hemispherical image. When used herein and in the claims, a "converter" refers to not only a manual system (splicing by hand and airbrush image altering techniques) but also an automatic image processing system (digital processing by a computer where images are altered automatically) for combining the two images together. Where a partial overlap exists between the two hemispherical images, the converter processes the partial overlap to remove the overlap and any distortion and create a single, complete, formed spherical image. Finally, a selected planar portion of the spherical image may be displayed on a personal computer using perspective correction software or hardware.

A method for capturing a spherical image includes the steps of capturing a first hemispherical image with a first camera including a first 180° or greater field-of-view lens; receiving a second hemispherical image either by capturing the second hemispherical image by means of a second camera including a second oppositely directed 180° or greater field-of-view lens or by creating a mirror image of the first hemispherical image; and, combining the first and second oppositely directed hemispherical images to create a spherical image.

An apparatus capturing a spherical image includes a first camera equipped with a 180° or greater field-of-view lens, the first camera and the lens directed in a first direction, the first camera capturing a first image; a second device either forming a second image corresponding to a mirror image of the first image or including a second camera equipped with a 180° or greater field-of-view lens, directed in a second direction opposite to the first direction, the second camera capturing the second image; and, a combining system for combining the first and second images into a formed spherical image.

The cameras disclosed above capture high resolution images. Various cameras may be used including still cameras, video cameras, and CCD, CID, or CMOS APS cameras. With high resolution (crystal clear) images as a goal, the system employs a still camera capturing a high resolution image on a fine grain film. Film generally composes a layer of silver halide crystals. Upon exposure to light, this silver halide layer picks up the image exposed to it. The greater the number of separate halide crystals, the greater the resolution of the film. Thus, a finer grain size refers to an increase in number of silver halide crystals per unit area of film which in turn refers to an increase in the potential resolution of the film medium.

When capturing a spherical image with two single-use cameras, the cameras include additional features allowing for dual image capture. Where "single-use camera" is referred to herein and in the claims, it refers to a disposable camera or other alternative. The additional features which aid in spherical image capture include attachment devices which attach the backs of the cameras to each other. When used herein, "attachment devices" refer to locking pins, locking clasps, lever and hook systems, and alternatives thereof. Also, each camera's shutter release may be controlled by a single button (common shutter release control) with either a mechanical or electrical servo linkage releasing each camera's shutter. Additionally, to allow a photographer to avoid his or her image from being captured by the spherical image capture system, the dual camera system includes a shutter auto timer or a remote shutter activation control controlling the common shutter release control. The remote shutter control may be an IR transmitter or remote shutter release cable. Further, the dual camera system may include two different shutters operable independently or sequentially. The sequential shutter operations allow the photographer to walk around to the other side of the dual camera system so as not to become part of the captured spherical image.

According to the present invention, when using a still image recorded on film, after developing the film, a high resolution digital scanner scans and digitizes the image contained in the developed film and stores the digitized image in a retrievable medium. The retrievable medium includes, inter alia, CD-ROMs, magnetic disks and tapes, semiconductor devices, and magneto-optical disks.

As referred to above, the second image may be created from the first image. This may be accomplished by at least one of two methods: first, manually, by forming the second image by hand and, second, automatically, by means of a computer running image processing software. As to manually creating the image, the film developing and printing steps generate the second image. For example, after printing or scanning the first hemispherical image, a technician or device flips or likewise reverses the film storing the at least hemispherical image (from left to right orientation to right to left orientation) and scans or prints the film again.

The automatic printing or scanning technique creates the second hemispherical image (also known as a mirror image of the first image) through appropriate software. Alternatively, image processing software or hardware may reverse the scanned image without the need to manually flip a developed piece of film.

The converter (automatic or manual) seams the two hemispherical images together and stores a generated, complete spherical image in a storage medium including CD-ROMs, magnetic disks and tapes, semiconductor devices

and magneto-optical disks. This converting may be accomplished by sending the camera and/or film to a processing center which sends back the spherical image stored in one of the above storage mediums.

Finally, using the perspective correction and manipulation system as disclosed in Patent No. 5,185,667 and its progeny including Patent Nos. 5,359,363 and 5,313,306 and serial nos. 08/189,585, 08/339,663, and 08/373,446, the formed, seamless, spherical image may be explored. These patents and applications and others herein are expressly incorporated by reference.

Preferably, a personal computer system runs the perspective correction software or hardware. These computers may be directly linked to the image capturing system (allowing viewing of the spherical image as captured by the hemispherical camera or cameras and manipulated by the perspective correction system) or may remain completely separate (photographing an image, sending the film to a processing center which creates a spherical image from the photograph or photographs, and returning the spherical image stored in a retrievable form for display on a personal computer).

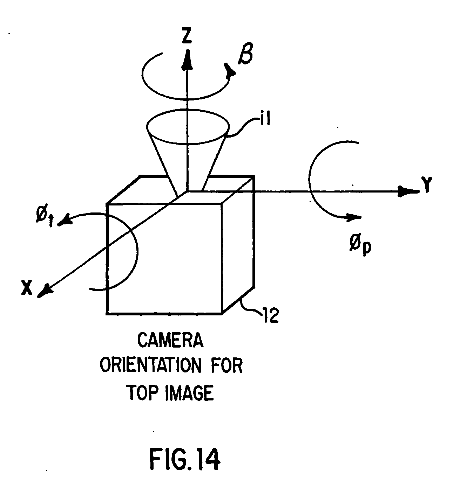

The problems and related problems of the prior art are overcome by the principles of the present invention. Rather than the approaches taken by the prior art, the approach described herein for providing immersive image viewing uses, by way of example only, a top side and bottom side (top hemisphere and bottom hemisphere) representation of a spherical image as will be described in greater detail with reference to Figures 14-18. These figures assume a camera pointed directly upward to capture a top side image (and downward to capture a bottom side image or, alternatively, the first captured image is axis-reversed to form a mirror image). Actually, any directional representation could have easily been shown and used, for example, by directing a camera to the left and to the right, or in other directions so long as an entire spherical image is obtained, preferably by capturing only two hemispherical or 180 degree images and combining them or combining a first captured image with its mirror (axis-reversed) image.

The method of the present invention provides a real-time interactive image window that can be directed anywhere in a sphere by using either a single wide angle lens (such as a fisheye lens) snapshot (and transforming its mirror image when on the bottom side) or automatically combining two fisheye lens captured images with seam filtering. The result is a totally immersive image of perspective corrected view. The approach can be performed on readily available personal computers and, with the appropriate image input, can be performed on still images, motion picture images or full motion video inputs. For example, fisheye distortion and perspective correction equations have been implemented which are customized to the lens used at key locations in the image and then linearized to provide a faithful transformation of the image. The process results in automatic seam minimization, reducing pixel address cumulative error to less than 2 pixels from the absolute transform while providing responsive transformational performance. The result is an accurate and responsive implementation that enables dual fisheye images to be perfectly seamed together so that no seam is visible to the viewer. Similarly, the technique can be applied with a single fisheye image to provide an immersive image with only a single hemispherical input image. The method determines a Z axis value to determine from which input image the needed output pixel is found. A positive Z value, for example, denotes a top side view and a negative value a bottom side view. "Z axis" is actually intended to define any axis so long as it corresponds to the axis of direction of the lens of a camera capturing the image. Again, "Z axis" is not intended to be limiting as, for example, it may comprise in a left/right visualization an X axis (or a Y axis), and a plus or minus X axis value could be used.

According to the principles of the present invention, a database composed at least of one 180 degree field of view (for example, fisheye lens captured) image or of two opposing 180 degree fisheye images is used to construct a perspective corrected, distortion removed image that can be pointed in any direction in an immersive sphere. The image database can be composed of a single 180 degree hemispherical image captured from a live video source, a still image from a still camera or an image series from a motion picture camera with the second half of the image created with the mirror image of the single image or a second image taken in the opposite direction from the first.

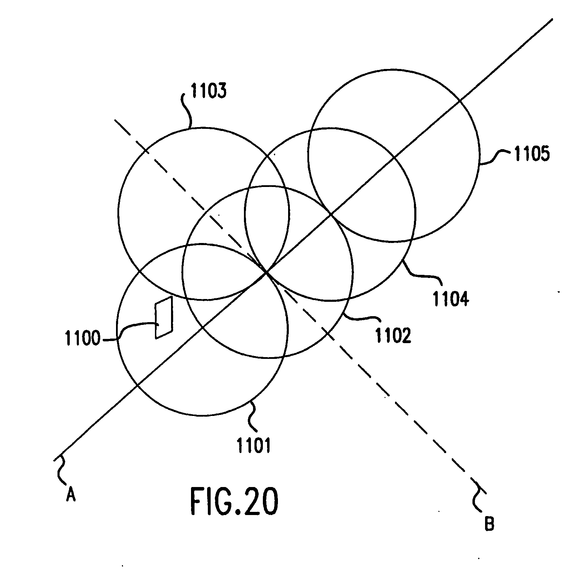

Techniques for capturing first and second images having an equal to or greater than 180 degree field of view are described in co-pending U.S. application serial no. 08/494,599, entitled "Method and Apparatus for Simultaneous Capture of a Spherical Image," of Danny A. McCall and H.Lee Martin, filed June 23, 1995, incorporated by reference herein as to its entire contents. These are combined to form a "bubble" or sphere and a sequence of such spheres may be combined to comprise a tour as will be further described herein in connection with a discussion of Figure 20.

Still image files are preprocessed to determine the border, center and radius of the fisheye image. Edge filtering (also referred to herein as seam filtering) is also automatically applied to eliminate the "halo" effect caused on the last few pixels at the rim edge of the image. This rim halo causes the outermost pixels that are a part of the image to be dimmed. The thickness of this dimming is only a few pixels, and the edge filtering is performed in a radial manner using linear pixel filtering and replication techniques across the radial vector that points from the perimeter to the center of each of the images. The resulting filtered image can be saved in the initial format ready for use by the image transformation system. The resulting cropped, seamed, scaled and filtered image is then saved in a format that can be used at a later time via hard disk media or transmitted over electronic networks. The ability to automatically create these files from a single image or a dual image is afforded by the accuracy of the method used to transform the images which corrects for distortion and perspective correction.

The archived spherical images are augmented by creation of active regions on the image that allow the user to interact with files saved with the image. These hot spots are created with a pixel editing program that allows the user to designate regions as areas of interest and name them for later programming reference. Once the hot spots have been created, the file may be compressed and formatted for size and color depth depending on how the image is to be delivered for display (for example, for CDROM, games, Internet, local area or private data network or other delivery).

Then, the hot spots together with sound, movies, text graphics or other related data are linked together to create a multimedia title. The end user of the device controls the direction of the view by moving a computer mouse, selecting a control button, or depressing control keys on a keyboard. Selection of the hot spots is accomplished, for example, by double-clicking the mouse within the hot spot and then the appropriate sound, text, or other image is displayed as summoned by computer code associated with the hot spot.

Through the use of perspective correction and manipulation disclosed in U. S. Patent No. 5,185,667 and its progeny including U.S. Patent Nos. 5,384,588; 5,359,363 and 5,313,306 and U. S. Patent Application Serial Nos. 08/189,585, 08/339,663 and 08/373,446, the formed seamless image may be explored. The exact representation of the transformation provided by this approach allows the seamless edges to be produced when the data is collected in a controlled manner.

Preferably, a personal computer system runs the perspective correction algorithms. These computers may be directly linked to the image capturing system (allowing live, full motion video from a video camera or still image manipulation from a digital still camera or scanned from a slide) or may remain completely separate (processing previously captured images from a compact disk read only memory (CDROM) or electronic network distribution of the image).

**BRIEF DESCRIPTION OF THE DRAWINGS**

The above mentioned features of the invention will become more clearly understood from the following detailed description of the invention read together with the drawings in which:

Figure 1 is a diagram of the fields of view for 180° and greater than 180° fields of view lenses as mounted to a single camera body.

Figure 2 shows two back-to-back cameras each capturing more than 180° fields of view images.

Figure 3 shows two back-to-back cameras each capturing 180° fields of view images.

Figure 4 shows an alternated embodiment of the spherical capture system of the present invention.

Figures 5A and 5B relate to the elements used to capture a spherical image. Figure 5A shows two hemispherical lenses capturing complementary hemispherical images and feeding them to remote cameras. Figure 5B shows a hemispherical lens capturing a hemispherical image and a mirror image converter for converting the first hemispherical image into a second hemispherical image.

Figure 6A shows two hemispherical lenses similar to that of Figure 5A passing images to local cameras through reflective and refractive optics. Figure 6B shows two hemispherical lenses conveying images to a single camera.

Figures 7A and 7B represent two hemispherical images combined into a single spherical image.

Figure 8 shows a storage/display option of the instant invention.

Figures 9A and 9B show a schematic block diagram of the signal processing portion of the present invention illustrating the major components thereof. Figure 9A shows the perspective correction process implemented in hardware. Figure 9B shows the perspective correction process implemented in software, operating inside a personal computer.

Figure 10 is an exemplary drawing of an at least hemispherical image used as input by the present invention. Lenses having other field-of-view values will produce images with similar distortion, particularly when the field-of-view is about eighty degrees or greater.

Figure 11 is an exemplary drawing of the output image after correction for a desired image or orientation and magnification within the original image.

Figure 12 is a schematic diagram of the fundamental geometry that the present invention embodies to accomplish the image transformation.

Figure 13 is a schematic diagram demonstrating the projection of the object plane and position vector into image plane coordinates.

Figure 14 shows the camera orientation for the top hemisphere and the nomenclature for the algorithm of the present invention.

Figure 15 shows a modified assumption in the algorithm development that allows for exact meshing of the seams on a fisheye lens by modifying the lens assumption to a thick lens approximation.

Figure 16 shows the relationship between the data in each one of the hemispheres and the progression of images across the seam or edge.

Figure 17 shows the calculation progression and the decision made as to which side of the sphere the data resides.

Figure 18 shows the user interface that allows control of the direction of the image center by the user of the system.

Figure 19 shows a system approach to the delivery of interactive spherical images allowing individuals to direct their view in any direction as described further by U.S. Patent 5,384,588.

Figure 20 is a representative diagram useful for describing an application of the present invention for, for example, constructing a tour of a museum and for describing how a user of the present invention would embark on the constructed tour.

## DETAILED DESCRIPTION OF THE INVENTION

### Spherical Image Capture

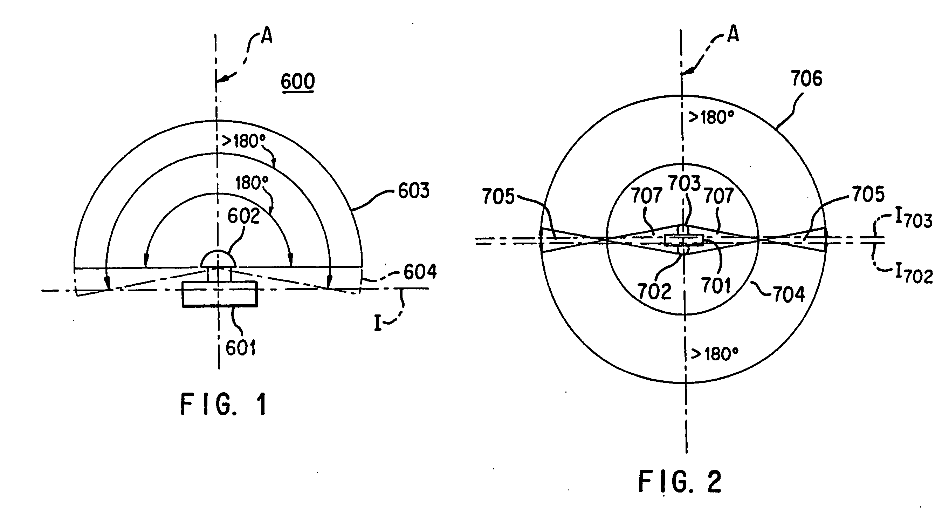

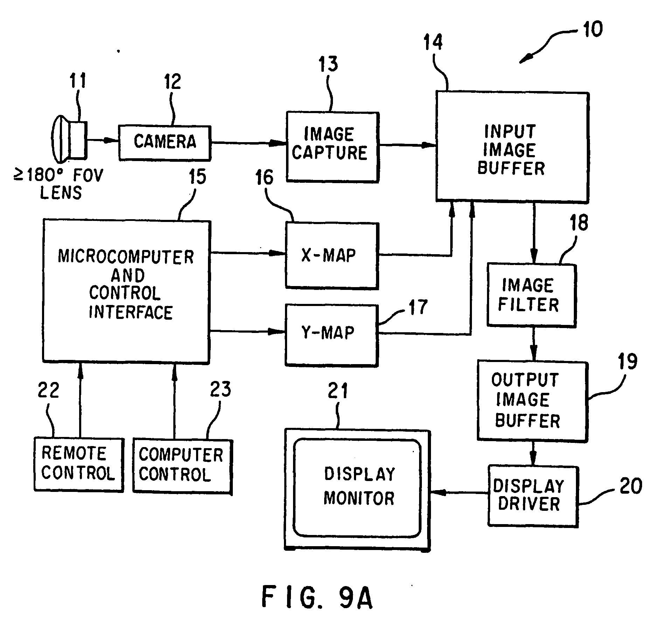

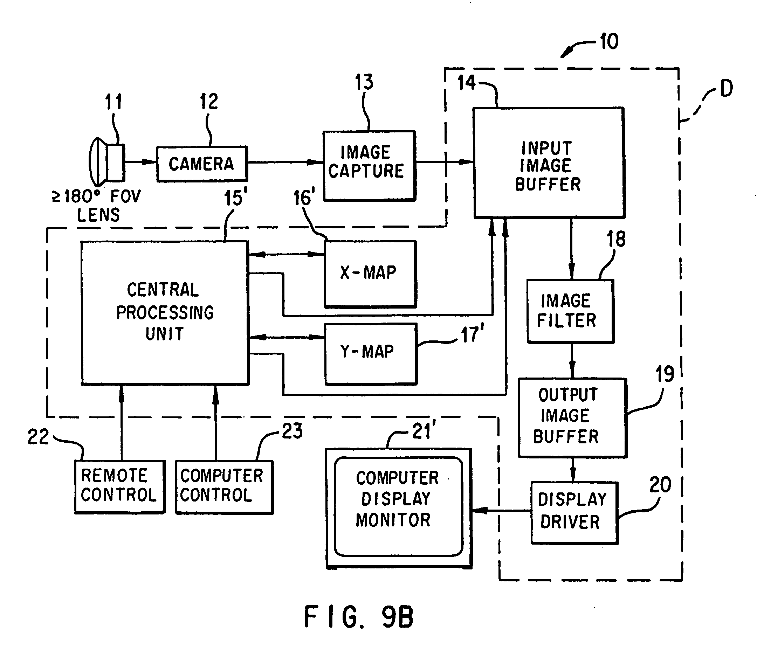

The disclosed Spherical Image Capture system employs the components disclosed in Figures 1-8 to capture hemispherical images and form spherical images. The image transform engine as disclosed in Figures 9-13 operates to transform selected portions of the formed spherical images into planar, perspective corrected portions.

Referring to Figure 1, camera 601 includes lens 602 with optical axis A, image plane I, and a field-of-view of 180° or greater. If lens 602 has a 180° field-of-view it captures at most the image from hemisphere 603. On the other hand, if lens 602 has a field-of-view greater than 180°, then it captures the image from sector 604 (shown by dotted lines) as well as that of hemisphere 603.

Figure 2 shows a camera body 701 (which may include two cameras) connected to lenses 702 and 703 (with image planes $I_{702}$ and $I_{703}$, respectively). Each of lenses 702 and 703 have fields of view greater than 180°. Placed in a back-to-back arrangement where the lenses are mounted such that the image planes $I_{702}$ and $I_{703}$ from the lenses fall between each of the lenses and both lenses' optical axes A coincide in a single line which passes through each lens and camera, they capture the spherical image surrounding the camera body 701. It should be noted, however, that the thickness of the camera body 701 plays a role in how much of the spherical image surrounding the camera is captured. Specifically, the objects on the sides of the camera may or may not be completely photographed depending on their distances from the camera body 701. For example, if objects are within boundary 704, some of the objects may fall into the camera's blind spots 707 and not be completely photographed. On the other hand, because of the converging angles of lenses' greater than 180° fields of view, objects within sectors 705 will be photographed twice: first, by means of the image captured by lens 702 and, second, by means of the image captured by lens 703. Decreasing the distances between the lenses reduces blind spots 707 of the spherical capture system. In this example, reducing the distance between the lenses means reducing the thickness of the camera body 701. Reducing the camera body thickness can be accomplished, for example, by using smaller imaging and recording elements such as a CCD, CID, or CMOS APS camera as disclosed in U.S. Serial No. 08/373,446, expressly incorporated herein by reference. Additionally, the distance between image planes $I_{702}$ and $I_{703}$ of lenses 702 and 703, respectively, may be reduced to the point where the image planes coincide, further reducing the thickness of the camera body.

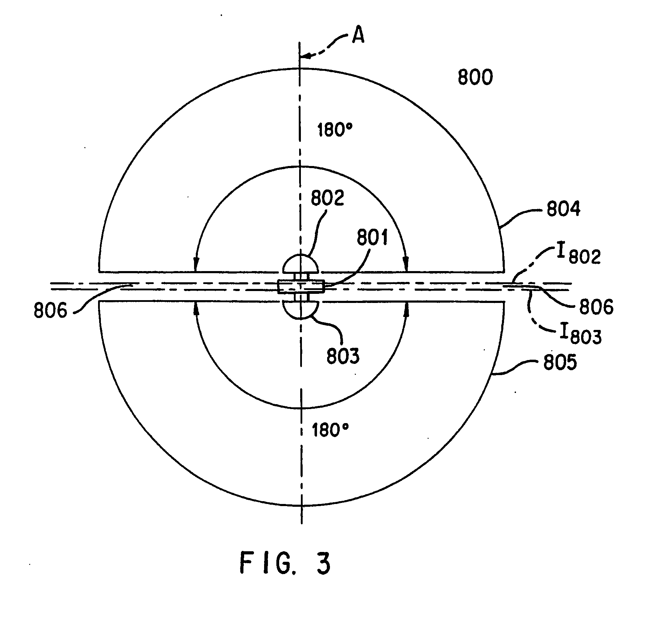

Figure 3 discloses camera body 801, similar to that of camera body 701, and lenses 802 and 803 with image planes $I_{802}$ and $I_{803}$, respectively, each having a field-of-view of exactly 180°. Lens 802 receives the image of hemisphere 804 and lens 803 receives the image of hemisphere 805. Similar to Figure 2 above, the lenses attach to camera body 801 in a back-to-back arrangement where the lenses are mounted such that the image planes $I_{802}$ and $I_{803}$ from the lenses fall between each of the lenses and both lenses' optical axes A coincide in a single line which passes through each lens and camera. As discussed with reference to Figure 2 above, because camera body 801 has a thickness (i. e., the distance between lenses 802 and 803 is greater than zero), the image capture system 800 has blind spots 806 on the sides of the camera body 801. These blind spots may be reduced by decreasing the distance between lenses 802 and 803. Here, this means reducing the thickness of camera body 801. This may be accomplished, inter alia, by reducing the size of the imaging and recording components as discussed above in reference to Figure 2.

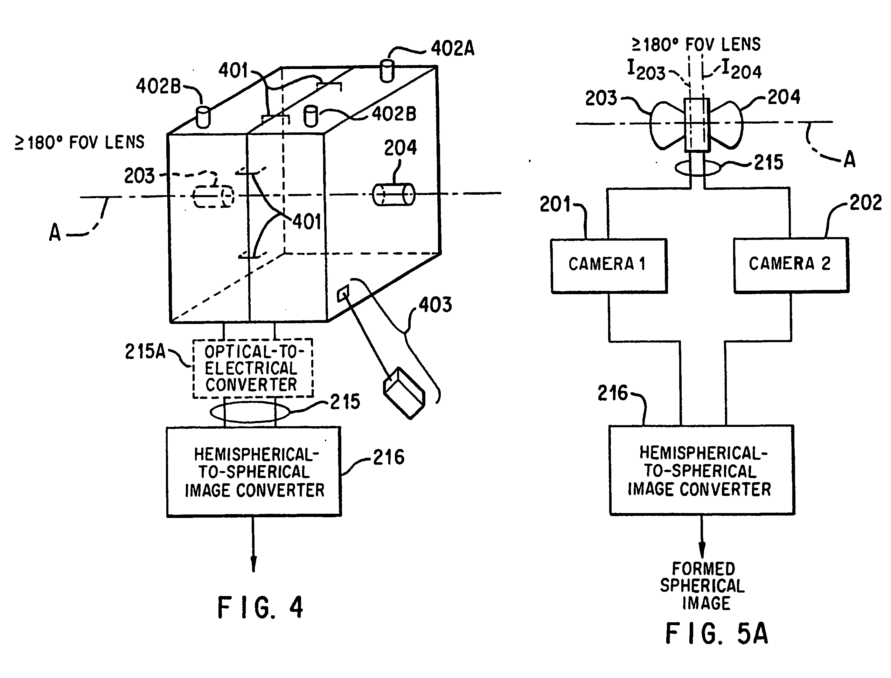

Referring now to Figure 4, two cameras 201 and 202 equipped with lenses 203, 204, each having a field-of-view (FOV) greater than 180°, are disclosed in a back-to-back arrangement (the image planes (not shown) falling between each of the lenses and the optical axes of the lenses 203 and 204 are collinear as designated by line A). Because each camera 201, 202 has a lens (203, 204) which has a field-of-view (FOV) greater than 180°, each captures more than the image of a complete hemisphere. By employing two cameras in this arrangement, the camera system captures a complete spherical image. The types of cameras employed are chosen from the group comprising of at least still cameras with loaded film or digital image capture, motion picture cameras with loaded film or digital image capture, the KODAK™ digital image capture system, video, and linear scanning CID, CCD, or CMOS APS camera arrays. The outputs of cameras 201 and 202 connect by means of electrical, optical, or electro-optical links 215 to hemispherical-to-spherical image converter 216. When the captured hemispherical images are stored on film, optical-to-electrical converter 215A converts the stored images into a form usable by hemispherical-to-spherical image converter 216. optical-to-electrical converter 215A includes a scanning system which scans a photographed image and outputs a high resolution, electronic replica of the photographed image. One converter includes the Kodak™ Photo-CD Rom converter which takes a photograph and converts it into a high resolution digital form which then may be stored on a compact disk. Hemispherical-to-spherical converter 216 receives the hemispherical images from cameras 201 and 202 (or alternatively, from optical-to-electrical converter 215A).

The cameras include additional features allowing for dual image capture. For example, the backs of the cameras are attached to each other via separable attachment devices 401. Attachment devices 401 may be locking pins, locking clasps, lever and clip systems, etc. Also, each camera's shutter release may be controlled by a single button 402 A (common shutter release control) with either a mechanical or electrical servo linkage releasing each camera's shutter. Additionally, to allow a photographer to ensure his or her image is not recorded by the spherical image capture system, the dual camera system includes a shutter auto timer or a remote shutter activation control 403 controlling the common shutter release control, allowing the photographer to move to a concealed or non-image-captured position. The remote shutter control 403 may be an IR transmitter or remote shutter release cable. Further, the dual camera system may include two different shutters release control buttons 402B operable independently or sequentially. The sequential shutter operations allow the photographer to walk around to the other side of the dual camera system so as not to become part of the captured spherical image.

Next, hemispherical-to-spherical converter 216 combines the hemispherical images into a single, complete spherical image. Finally, the edges of the two hemispherical images may be combined to form a seamless spherical image. Removing the seams from the two hemispherical images may be accomplished in a number of ways. For example, the two images may be "airbrushed" together (where any difference between the two images at the periphery of the images are smoothed together. Alternatively, a more complex method of seaming the two images together may include matching related pixels by their luminance and chrominance values and interpolating the corresponding values for interstitial pixels. In the event that a partial overlap exists between the two hemispherical images, the converter processes the spherical image to remove the partial overlap any distortion and creates a single, complete, formed image. The processing may include choosing and displaying one hemisphere over the other, weighted and non-weighted averaging of the overlapping sections, and linear and non-linear approximations creating intermediary images.

Figure 5A shows lenses 203 and 204 positioned remotely from cameras 201 and 202. Here, the image planes $I_{203}$ and $I_{204}$ fall between lenses 203 and 204 and the optical axes of the lenses 203 and 204 are collinear as designated by line A. Electrical, optical (including fiber optic lines), or electro-optical links 215 connect the images received from lenses 203 and 204 to the cameras 201 and 202. Next, hemispherical-to-spherical image converter 216 receives the outputs from cameras 201 and 202 and outputs a spherical image as described in relation to Figure 4.

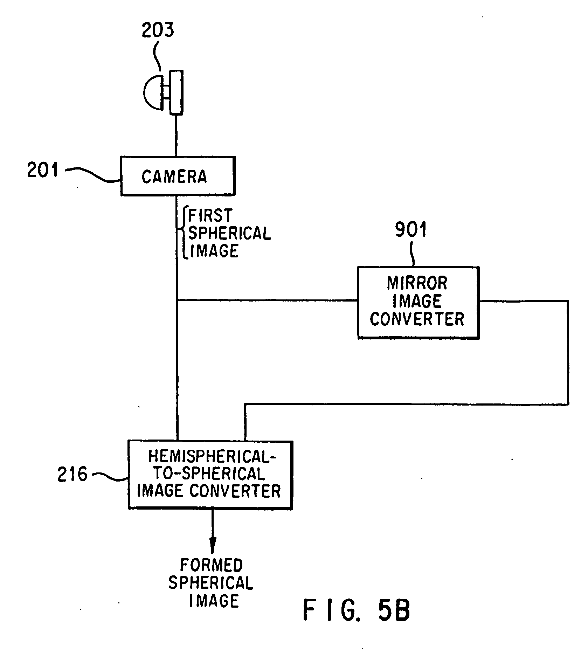

Figure 5B shows single lens 203 positioned remotely from camera 201. Electrical, optical (including fiber optic lines), or electro-optical links 215 connect the image received from lens 203 to the camera 201. Next, camera 201 captures a first hemispherical image. The output of camera 201 (a still or video image contained in a frame or frames of film, digital or analog signal) is sent to mirror image converter 901 and one input of the hemispherical to spherical image converter 216. The mirror image converter 901 assumes many forms depending on the form of image relayed to it. For developed film, converter 901 refers to a re-scanning system re-scanning the developed film with the film flipped (flipped from a left to right orientation to a right to left orientation). For an optical or electrical signal, converter 901 refers to a signal processing system which automatically creates a second hemispherical image from the first hemispherical image. The output of converter 901 flows to the hemispherical-to-spherical image converter 216 as the second hemispherical image. Finally, hemispherical-to-spherical image converter 216 outputs a spherical image as described in relation to Figure 4.

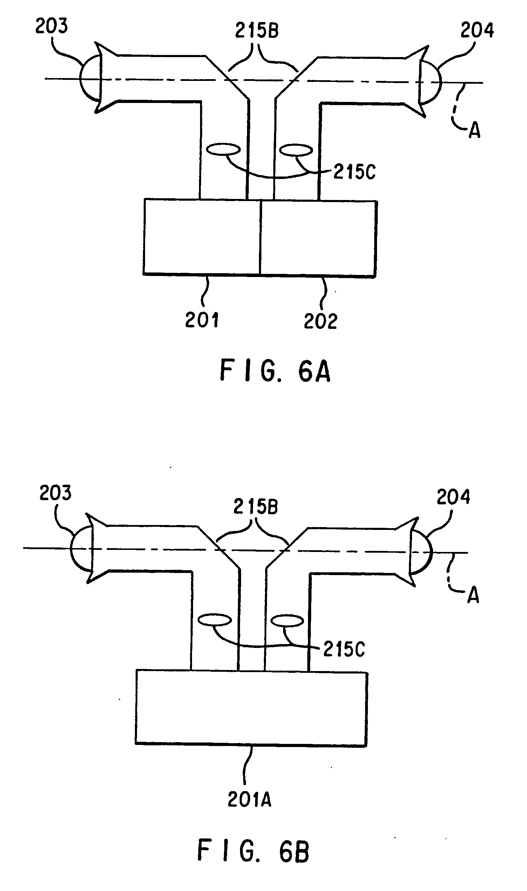

Figure 6A shows an alternative arrangement of the cameras 201 and 202 and the lenses 203 and 204. The optical axes of the lenses 203 and 204 are collinear as designated by line A. Here, the devices used to convey the images from lenses 203 and 204 to cameras 201 and 202 include hollow chambers with reflective optics 215B and refractive optics 215C, as necessary for proper transmission of the hemispherical images. The reflective optics 215B allow the cameras 201 and 202 to be moved from a location directly behind each lens 203, 204. The refractive optics 215C aid in focusing the hemispherical images generated by lenses 203 and 204. This movement of the cameras from behind the lenses allows the lenses to be moved closer together, maximizing the area photographed.

A further modification includes the substitution of the APS camera array of co-pending U.S. Application 08/373,446 (expressly incorporated herein by reference) for the optical system described above. Because of the small size of an APS camera array, two arrays may be placed back to back to further maximize the content of each hemispherical image. An advantage of using APS camera arrays is the shifted processing location of the Omniview engine. Specifically, by adding additional processing circuitry on the APS camera array chip, the selection and "dewarping" transformations may be performed locally on the APS chip. This results in less subsequent processing of the image as well as a reduction in the bandwidth required for sending each hemispherical image to an external processing device.

Furthermore, as described above, image conduits 215 may include optical fibers instead of the reflective optics 215B and refractive optics 215C. An imaging system including optical fibers connected between a hemispherical lens and imaging array is found in U.S. Patent No. 5,313,306 to Martin which is expressly incorporated by reference. The present invention includes the application of the spherical imaging system with a combination of an endoscope and dual hemispherical lenses to capture hemispherical images of remote locations. Converter 216 combines the hemispherical images to a form complete, spherical image.

Figure 6B relates to another embodiment where a single camera 201A captures the images produced by lenses 203 and 204. The optical axes of the lenses 203 and 204 are collinear as designated by line A. Here, employing a single camera to capture both hemispherical images (from lenses 203 and 204) eliminates the bulk of the second camera. For example, where camera 201A is a still camera, the camera records the two hemispherical images in a single frame in a side-by-side relationship, exposed at the same time or during related time intervals. Alternatively, the two images may be captured in separate frames, exposed at the same time or during related time intervals. The same applies to video and motion picture cameras as well. Image capture with a single camera may be used in the other embodiments of described in greater detail herein. A system of Figure 6B including an APS camera array may be mounted onto a single, silicon chip. This combination has multiple advantages including reduced size of the image capture system, reduced bulk from extra cameras, higher resolution from the APS camera arrays,

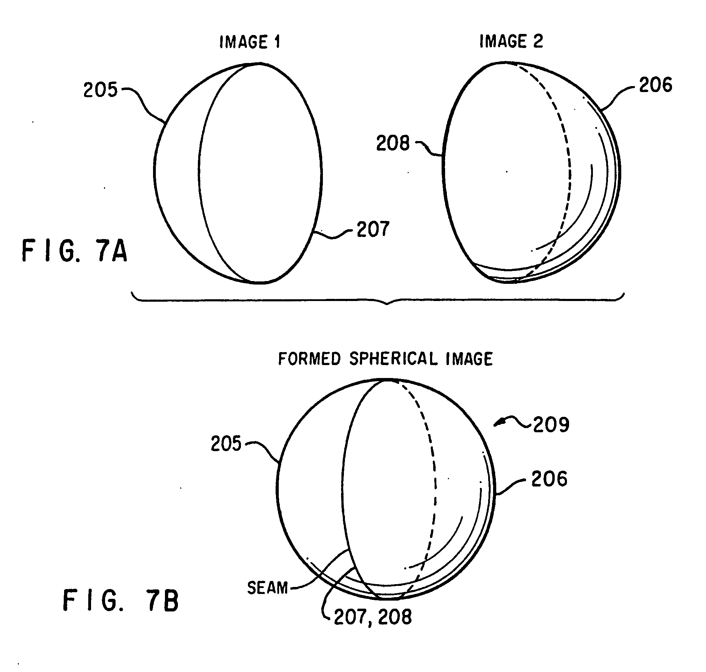

Figure 7A shows first 205 and second 206 hemispherical images, each taken from one of cameras 201 or 202. Figure 7A also shows the edges 207, 208 (or seams) of each hemispherical image. Figure 7B shows the two images 205 and 206 combined into a single, spherical image 209. Seams 207 and 208 have been combined to form the single, seamless image 209.

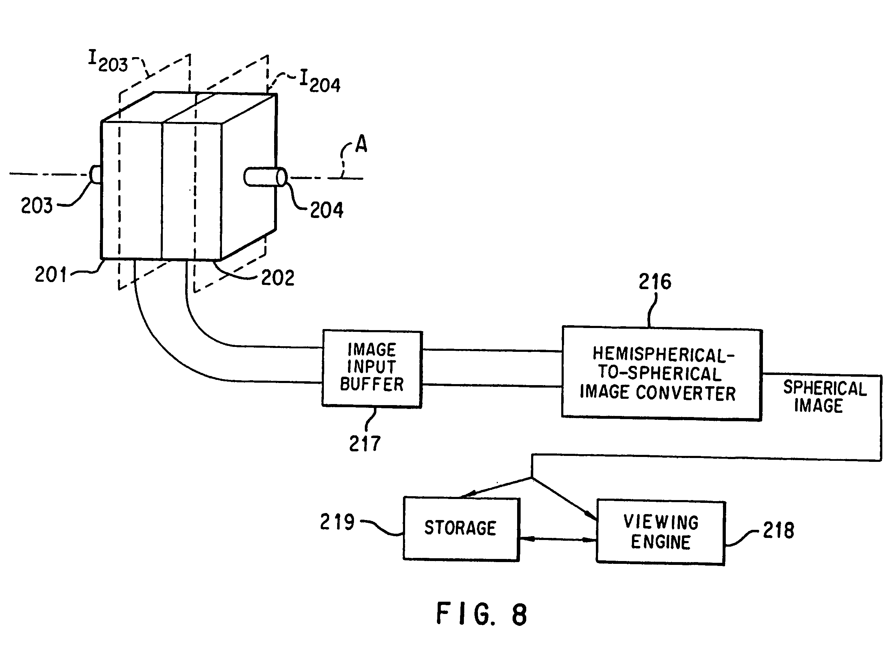

Figure 8 shows a possible future viewing system for viewing the formed spherical image system. The image planes $I_{203}$ and $I_{204}$ fall between lenses 203 and 204 and the optical axes of the lenses 203 and 204 are collinear as designated by line A. Image input buffer 217 temporarily stores images received from cameras 201 and 202 until hemispherical-to-spherical image converter 216 accepts the stored images. Also, Figure 8 includes options for the spherical images. For example, after combining the two hemispherical images into a single, spherical image in converter 216, the spherical image may be immediately viewed through viewing engine 218. Viewing engine 218 includes the omniview calculation engine with viewer communication interface 124 as shown in Figure 1 of co-pending U.S. Serial No. 08/373,446 (expressly incorporated herein by reference). Here, the user may view selected portions of the formed spherical image as output from the hemispherical-to-spherical image converter 216. Alternatively, the spherical image may be stored in storage device 219. The storage device 119 may include video tape, CD-ROM, semiconductor devices, magnetic or magneto-optical disks, or laser disks as the storage medium. By the interconnections between viewing engine 218 and storage device 219, a new spherical image may be displayed and saved in storage device 219 as well as saved in storage device 219 and viewed at a later time.

Further enhancements include using two side-by-side hemispherical lens equipped cameras for stereo-optical viewing. Additionally, the back-to-back camera system described herein may be attached to the exterior of any of a number of different vehicles for spherical image capture of a number of different environments.

### Captured Image Transformation

Figures 9-13 relate to the captured image transformation system.

In order to minimize the size of the camera orientation system while maintaining the ability to zoom, a camera orientation system that utilizes electronic image transformation rather than mechanisms was developed. While numerous patents on mechanical pan-and-tilt systems have been filed, no approach using strictly electronic transforms and 180° or greater field of view optics is known to have been successfully implemented. In addition, the electro-optical approach utilized in the present invention allows multiple images to be extracted from the output of a signaled camera. These images can be then utilized to energize appropriate alarms, for example, as a specific application of the basic image transformation in connection with a surveillance system. As utilized herein, the term "surveillance" has a wide range including, but not limited to, determining ingress or egress from a selected environment. Further, the term "wide angle" as used herein means a field-of-view of about eighty degrees or greater. Motivation for this device came from viewing system requirements in remote handling applications where the operating envelop of the equipment is a significant constraint to task accomplishment.

The principles of the optical transform utilized in the present invention can be understood by reference to the system 10 of Figures 9A and 9B. (This is also set forth in the aforecited U.S. Patent Application Serial Number 07/699,366 that is incorporated herein by reference.) Referring to Figure 9A, shown schematically at **11** is a wide angle, e.g., a hemispherical, lens that provides an image of the environment with a 180 degree or greater field-of-view. The lens is attached to a camera **12** which converts the optical image into an electrical signal. These signals are then digitized electronically **13** and stored in an image buffer **14** within the present invention. An image processing system consisting of an X-MAP and a Y-MAP processor shown as **16** and **17,** respectively, performs the two-dimensional transform mapping. The image transform processors are controlled by the microcomputer and control interface **15.**

The microcomputer control interface provides initialization and transform parameter calculation for the system. The control interface also determines the desired transformation coefficients based on orientation angle, magnification, rotation, and light sensitivity input from an input means such as a joystick controller **22** or computer input means **23**. The transformed image is filtered by a 2-dimensional convolution filter **18** and the output of the filtered image is stored in an output image buffer **19**. The output image buffer **19** is scanned out by display electronics **20** to a video display device **21** for viewing.

A range of lens types can be accommodated to support various fields of view. The lens optics **11** correspond directly with the mathematical coefficients used with the X-MAP and Y-MAP processors **16** and **17** to transform the image. The capability to pan and tilt the output image remains even though a different maximum field-of-view is provided with a different lens element.

The invention can be realized by proper combination of a number of optical and electronic devices. The lens **11** is exemplified by any of a series of wide angle lenses from, for example, Nikon, particularly the 8mm F2.8. Any video source **12** and image capturing device **13** that converts the optical image into electronic memory can serve as the input for the invention such as a Videk Digital Camera interfaced with Texas Instrument's TMS 34061 integrated circuits. Input and output image buffers **14** and **19** can be construed using Texas Instrument TMS44C251 video random access memory chips or their equivalents. The control interface can be accomplished with any of a number of microcontrollers including the Intel 80C196. The X-MAP and Y-MAP transform processors **16** and **17** and image filtering **19** can be accomplished with application specific integrated circuits or other means as will be known to persons skilled in the art. The display driver can also be accomplished with integrated circuits such as the Texas Instruments TMS34061. The output video signal can be of the NTSC RS-170, for example, compatible with most commercial television displays in the United States. Remote control **22** and computer control **23** are accomplished via readily available switches and/or computer systems than also will be well known. These components function as a system to select a portion of the input image (hemispherical or other wide angle) and then mathematically transform the image to provide the proper prospective for output. The keys to the success of the perspective correction system include:

(1) the entire input image need not be transformed, only the portion of interest;
(2) the required mathematical transform is predictable based on the lens characteristics; and
(3) calibration coefficients can be modified by the end user to correct for any lens/camera combination supporting both new and retrofit applications.

Figure 9B contains elements similar to that of Figure 9A but is implemented in a personal computer represented by dashed line D. The personal computer includes central processing unit **15'** performing the perspective correction algorithms X-MAP **16'** and Y-MAP **17'** as stored in RAM, ROM, or some other form. The display driver **20** outputs the perspective corrected image to computer display monitor **21'**.

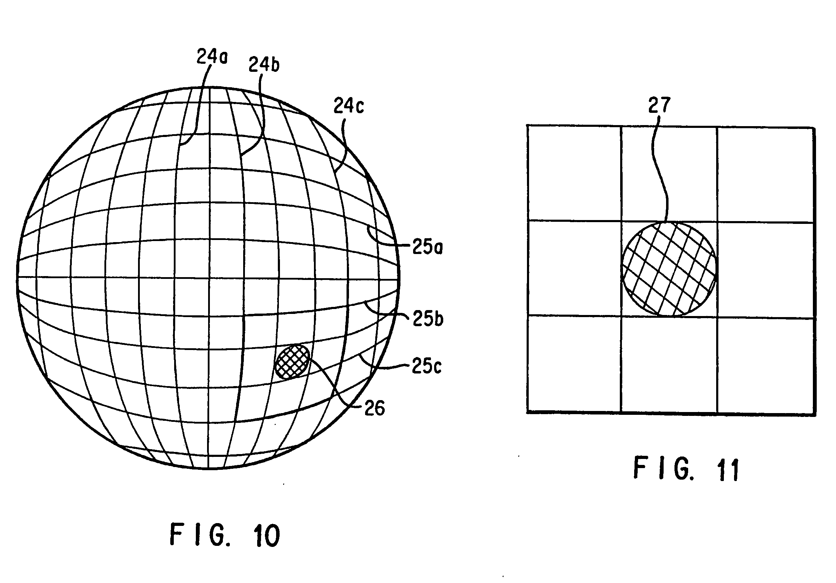

The transformation that occurs between the input memory buffer **14** and the output memory buffer **19,** as controlled by the two coordinated buffer **19,** as controlled by the two coordinated transformation circuits **16** and **17** of Figure 9A (or algorithms as stored in **16'** and **17'** of Figure 9B), is better understood by referring to Figures **10** is a rendering of the image of a grid pattern produced by a hemispherical lens. This image has a field-of-view of 180 degrees and shows the contents of the environment throughout and entire hemisphere. Notice that the resulting image in Figure 10 is significantly distorted relative to human perception. Similar distortion will be obtained even with lesser field-of-view lenses. Vertical grid lines in the environment appear in the image plane as **24a, 24b,** and **24c.** Horizontal grid lines in the environment appear in the image plane as **25a, 25b,** and **25c.** The image of an object is exemplified by **26.** A portion of the image in Figure 10 has been corrected, magnified, and rotated to produce the image shown in Figure 11. Item **27** shows the corrected representation of the object in the output display. The results shown in the image in Figure 11 can be produced from any portion of the image of Figure 10 using the present invention. The corrected perspective of the view is demonstrated by the straightening of the grid pattern displayed in Figure 11. In the present invention, these transformations can be performed at real-time video rates (e.g., thirty times per second), compatible with commercial video standards.

The transformation portion of the invention as described has the capability to pan and tilt the output image through the entire field-of-view of the lens element by changing the input means, e.g. the joystick or computer, to the controller. This allows a large area to be scanned for information as can be useful in security and surveillance applications. The image can also be rotated through any portion of 360 degrees on its axis changing the perceived vertical of the displayed image. This capability provides the ability to align the vertical image with the gravity vector to maintain a proper perspective in the image display regardless of the pan or tilt angle of the image. The invention also supports modifications in the magnification. used to display the output image. This is commensurate with a zoom function that allows a change in the field-of-view of the output image. This function is extremely useful for inspection and surveillance operations. The magnitude of zoom provided is a function of the resolution of the input camera, the resolution of the output display, the clarity of the output display, and the amount of picture element (pixel) averaging that is used in a given display. The invention supports all of these functions to provide capabilities associated with traditional mechanical pan (through 180 degrees), tilt (through 180 degrees), rotation (through 360 degrees), and zoom devices. The digital system also supports image intensity scaling that emulates the functionality of a mechanical iris by shifting the intensity of the displayed image based on commands from the user or an external computer.

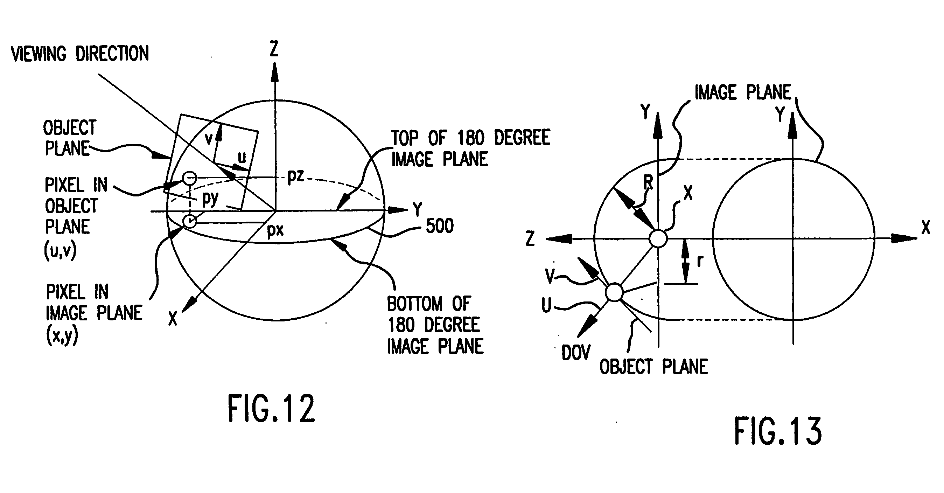

The postulates and equations that follow are based on the image transformation portion of the present invention utilizing a wide angle lens as the optical element. These also apply to other field-of-view lens systems. There are two basic properties and two basic postulates that describe the perfect wide angle lens system. The first property of such a lens is that the lens has a $2\pi$ ateradian filed-of-view and the image it produces is a circle. The second property is that all objects in the field-of-view are in focus, i.e. the perfect wide angle lens has an infinite depth-of-field. The two important postulates of this lens system (refer to Figures 12 and 13) are stated as follows:

Postulate 1: Azimuth angle invariability - For object points that lie in a content plane that is perpendicular to the image plane and passes through the image plane origin, all such points are mapped as image points onto the line of intersection between the image plane and the content plane, i.e. along a radial line. The azimuth angle of the image points is therefore invariant to elevation and object distance changes within the content plane.

Postulate 2: Equidistant Projection Rule - The radial distance, r, from the image plane origin along the azimuth angle containing the projection of the object point is linearly proportional to the zenith angle $\beta$, where $\beta$ is defined as the angle between a perpendicular line through the image plane origin and the line from the image plane origin to the object point. Thus the relationship:

$$r = k\beta \tag{1}$$

Using these properties and postulates as the foundation of the lens system, the mathematical transformation for obtaining a perspective corrected image can be determined. Figure 12 shows the coordinate reference frames for the object plane and the image plane. The coordinates u,v describe object points within the object plane. The coordinates x,y,z describe points within the image coordinate frame of reference.

The object plane shown in Figure 12 is a typical region of interest to determine the mapping relationship onto the image plane to properly correct the object. The direction of view vector, DOV[x,y,z], determines the zenith and azimuth angles for mapping the object plane, UV, onto the image plane, XY. The object plane is defined to be perpendicular to the vector, DOV[x,y,z].

The location of the origin of the object plane in terms of the image plane [x,y,z] in spherical coordinates is given by:

$$x = D \sin\beta \cos\partial$$
$$y = D \sin\beta \cos\partial \tag{2}$$
$$z = D \cos\beta$$

where D = scaler length from the image plane origin to the object plane origin, $\beta$ is the zenith angle, and $\partial$ is the azimuth angle in image plane spherical coordinates. The origin of object plane is represented as a vector using the components given in Equation 1 as:

$$DOV[x,y,z] = [D\sin\beta\cos\partial, D\sin\beta\sin\partial, D\cos\beta] \tag{3}$$

DOV[x,y,z] is perpendicular to the object plane and its scaler magnitude D provides the distance to the object plane. By aligning the **XY** plane with the direction of action of DOV[x,y,z], the azimuth angle $\partial$ becomes either 90 or 270 degrees and therefore the x component becomes zero resulting in the DOV[x,y,z] coordinates:

$$DOV[x,y,z] = [0, -D\sin\beta, D\cos\beta] \tag{4}$$

Referring now to Figure 13, the object point relative to the UV plane origin in coordinates relative to the origin of the image plane is given by the following:

$$x = u$$
$$y = v \cos\beta \qquad (5)$$
$$z = v \sin\beta$$

therefore, the coordinates of a point P(u,v) that lies in the object plane can be represented as a vector P[x,y,z] in image plane coordinates:

$$P[x,y,z] = [u, v\cos\beta, v\sin\beta] \qquad (6)$$

where P[x,y,z] describes the position of the object point in image coordinates relative to the origin of the UV plane. The object vector o[x,y,z] that describes the object point in image coordinates is then given by:

$$O[x,y,z] = DOV[x,y,z] + P[x,y,z] \qquad (7)$$

$$O[x,y,z] = [u, v\cos\beta - D\sin\beta, v\sin\beta + D\cos\beta] \qquad (8)$$

Projection onto a hemisphere of radius R attached to the image plane is determined by scaling the object vector o[x, y,z] to produce a surface vector s[x,y,z]:

$$S[x,y,z] = \frac{RO[x,y,z]}{|O[x,y,z]|} \qquad (9)$$

By substituting for the components of o[x,y,z] from Equation 8, the vector S[x,y,z] describing the image point mapping onto the hemisphere becomes:

$$S[x,y,z] = \frac{RO[u, (v\cos\beta - D\sin\beta),(v\sin\beta + D\cos\beta)]}{\sqrt{u^2 + (v\cos\beta - D\sin\beta)^2 + (v\sin\beta + D\cos\beta)^2}} \qquad (10)$$

The denominator in Equation 10 represents the length or absolute value of the vector o[x,y,z] and can be simplified through algebraic and trigonometric manipulation to give:

$$S[x,y,z] = \frac{RO[u,(v\cos\beta - D\sin\beta),(v\sin\beta + D\cos\beta)]}{\sqrt{u^2 + v^2 + D^2}} \qquad (11)$$

From Equation 11, the mapping onto the two-dimensional image plane can be obtained for both x and y as:

$$x = \frac{Ru}{\sqrt{u^2 + v^2 + D^2}} \qquad (12)$$

$$y = \frac{R(v\cos\beta - D\sin\beta)}{\sqrt{u^2 + v^2 + D^2}} \qquad (13)$$

Additionally, the image plane center to object plane distance D can be represented in terms of the image circular radius R by the relation:

$$D = mR \qquad (14)$$

where m represents the scale factor in radial units R from the image plane origin to the object plane origin.

Substituting Equation 14 into Equations 12 and 13 provides a means for obtaining an effective scaling operation or magnification which can be used to provide zoom operation.

$$x = \frac{Ru}{\sqrt{u^2+v^2+m^2+R^2}} \qquad (15)$$

$$y = \frac{R(v\cos\beta - mR\sin\beta)}{\sqrt{u^2+v^2+m^2+R^2}} \qquad (16)$$

Using the equations for two-dimensional rotation of axes for both the **UV** object plane and the **XY** image plane the last two equations can be further manipulated to provide a more general set of equations that provides for rotation within the image plane and rotation within the object plane.

$$x = \frac{R[uA - vB + mR\sin\beta\sin\partial}{\sqrt{u^2+v^2+m^2R^2}} \qquad n(17)$$

$$y = \frac{R[uC - vD - mR\sin\beta\cos\partial}{\sqrt{u^2+v^2+m^2R^2}} \qquad (18)$$

where:

$$
\begin{aligned}
A &= (\cos\o\cos\partial - \sin\o\sin\partial\cos\beta) \\
B &= (\sin\o\cos\partial + \cos\o\sin\partial\cos\beta) \\
C &= (\cos\o\sin\partial + \sin\o\cos\partial\cos\beta) \\
D &= (\sin\o\sin\partial - \cos\o\cos\partial\cos\beta)
\end{aligned}
\qquad (19)
$$

and where:

R = radius of the image circle
β = zenith angle
∂ = Azimuth angle in image plane
ø = Object plane rotation angle
m = Magnification
u,v = object plane coordinates
x,y = image plane coordinates

The Equations 17 and 18 provide a direct mapping from the **UV** space to the **XY** image space and are the fundamental mathematical result that supports the functioning of the present omnidirectional viewing system with no moving parts. By knowing the desired zenith, azimuth, and object plane rotation angles and the magnification, the locations of x and y in the imaging array can be determined. This approach provides a means to transform an image from the input video buffer to the output video buffer exactly. Also, the image system is completely symmetrical about the zenith, therefore, the vector assignments and resulting signs of various components can be chosen differently depending on the desired orientation of the object plane with respect to the image plane. In addition, these postulates and mathematical equations can be modified for various lens elements as necessary for the desired field-of-view coverage in a given application.

The input means defines the zenith angle, β, the azimuth angle, ∂, the object rotation, ø, and the magnification, m. These values are substituted into Equations 19 to determine values for substitution into Equations 17 and 18. The image circle radius, R, is fixed value that is determined by the camera lens and element relationship. The variables u and v vary throughout the object plane determining the values for x and y in the image plane coordinates.

From the foregoing, it can be seen that a wide angle lens provides a substantially hemispherical view that is captured by a camera. The image is then transformed into a corrected image at a desired pan, tilt, magnification, rotation, and focus based on the desired view as described by a control input. The image is then output to a television display with the perspective corrected. Accordingly, no mechanical devices are required to attain this extensive analysis and presentation of the view of an environment through 180 degrees of pan, 180 degrees of tilt, 360 degrees of rotation, and various degrees of zoom magnification.

As indicated above, one application for the perspective correction of images obtained with a motionless wide angle camera is in the field of surveillance. The term "surveillance" is meant to include inspection and like operations as well. It is often desired to continuously or periodically view a selected environment to determine activity in that environment. The term "environment" is meant to include such areas as rooms, warehouses, parks and the like. This activity might be, for example, ingress and egress of some object relative to that environment. It might also be some action that is taking place in that environment. It may be desired to carry out this surveillance either automatically at the desired frequency (or continuously), or upon demand by an operator. The size of the environment may require more than one motionless camera for complete surveillance.

Figure 14 shows the orientation of the camera 12 of Figure 9A with lens 11 pointed upward for the capture of the top side or top-most image of the image plane. Again, as used herein, for simplicity, top side and bottom side are used by way of example when left and right or other capture of a spherical image may be accomplished according to the relative position or direction of the camera 12 in relation to an object to be viewed and its image captured. If a second image is used for the other hemisphere, it would be taken (captured) in the exact opposite direction (the lens 11 facing down in this example). The user designates a viewing direction that directs the center of the object, or viewing plane, as shown in Figure 12. The object plane as used herein means the plane in which an object to be viewed is located and a pixel or picture element in the object plane is given the coordinates (u,v). Figure 12 shows all the nomenclature used herein for extension of the image transformation into the vertical axis for determination of which side of the image plane a given image falls if two hemispheres are combined to make a spherical representation. The image plane as used herein is to be considered the plane in which the image is to be viewed and a pixel in that plane has the coordinates (x,y). A person standing at the center of the depicted sphere is to be assumed to be looking in the viewing direction shown at an object in the object plane. A pixel in the object plane must be transformed and warp and distortion corrected into a pixel in an image plane according to user selected pan, tilt, rotation and magnification values. When the z-axis value is positive, the image is obtained from the data file representing the top side of the image plane. When the z-axis calculation is negative, the image is obtained from the file representing the bottom side of the image plane. An equator-like line 500 separates the top of a 180 degree image plane from the bottom of a 180 degree image plane. If a single hemisphere is used, then a negative z-axis value designates obtaining the data from a mirror image of the original hemisphere providing a total immersion for the user, even though only one hemisphere is present.

Digitally, this mirror image is accomplished simply by storing each pixel value (u,v) as reversed about a vertical axis at its center so that left appears as right and right appears as left in the mirror image. Of course, as one views their image in a mirror, there is no change in the vertical axis. Similarly, a mirror image is digitally constructed, if, for example represented as coordinate values for a horizontal axis (left and right) and for a vertical axis (top to bottom) at the center of the image, by making positive horizontal values negative values and negative horizontal values positive and leaving vertical axis values the same. Where an image at the border is to be mirrored and two hemispherical images joined, the stored image sample values are approximately equal on the border or edge 500; consequently, the pixel values are matched and stored at the border (seam) so that no seam is visible as will be explained further herein.

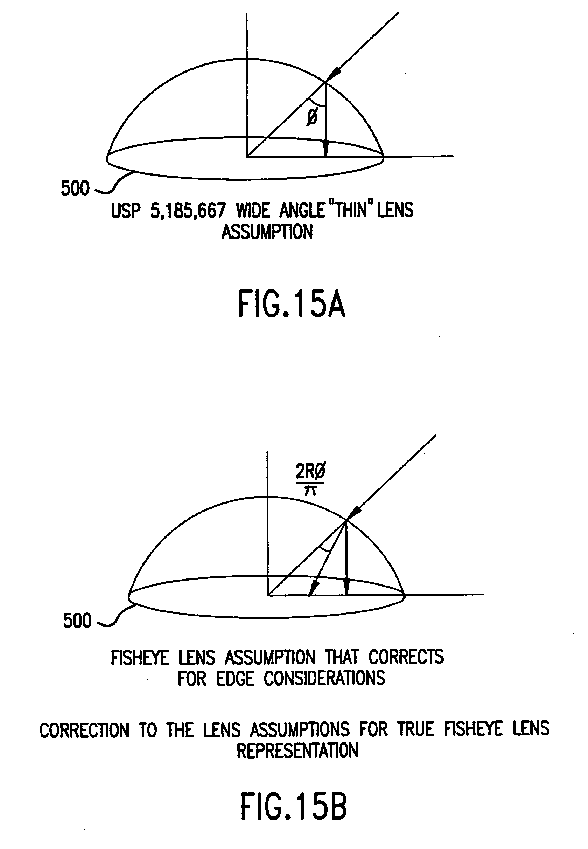

Referring to Figure 15, a precise calculation of the image transformation is needed at the border or edges of the hemispheres (or around equator 500) to assure that the visual effect of seams are minimized. Firstly, it is important to determine the location of the border from the first and second captured images or as between an image and its mirror image. For example, where the Z values are zero, the highest x and y values for each of two hemispheres determine the value. This highest value exists at the radius of the image circle (R in the below provided equations).

The relationship for R is given by $\sqrt{X^2 + Y^2}$.

The original Omniview transformation is derived and detailed in U.S. Patent 5,185,667 and assumed an angle $\phi$. It has been modified according to the present invention with the assumption of a thick lens rather than thin lens 11 to assure that the meshing of the seams is favorably accomplished. The mathematical relation of the thick lens relative to the thin lens is given in Figure 15 such that an assumption that corrects for edge considerations involves an angle $\phi/2$. It is a necessary assumption for accurate seaming at the edge 500 of the fisheye and is logical since the fisheye lens is a thick lens. The assumption utilizes the mathematical relationship for light impinging on a lens and camera as a function of its incident angle. For light rays directed at the lens along the axis of the lens, then $\phi$ is 0 degrees. For light rays coming in from the edge of the lens, $\phi$ is ninety degrees. The correction for the thick lens is that the angle used to calculate the final light ray destination is $\phi/2$, not $\phi$. As a result of this assumption, there has been demonstrated a noticeable improvement at the very edge of the image. As will be further described herein, this $\phi$ is related to the angle $\beta$, the zenith angle, wherein the old $\phi$ was identical to beta but the new $\phi$ is actually $\beta/2$.

Image files are preferably preprocessed, but may be processed in real time, to determine the border, center and radius of the hemispherical image (depending on the lens used). Seam (or edge) filtering is preferably applied automatically to eliminate a "halo" effect caused on the last few pixels at the rim edge of the image. This rim halo causes the outermost pixels that are part of the image to be dimmed. The thickness of this dimming is only a few pixels, and the filtering is preferably performed in a radial manner (around the line 500) using linear pixel filtering and replication techniques across the radial vector that points from the perimeter of the edge to the center of each of the images. Examples of linear pixel filtering techniques that may be used include a median filter (where the two outer pixels are replaced with the most prevalent pixel value in the region) or an average filter (where you average two pixels together and use the average value), other appropriate mathematical relationship or combinations of such relationships.

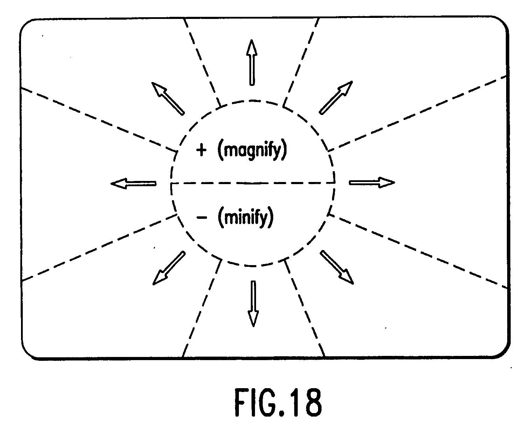

So-called "hot spots" are spots identified by a user as the user interacts with the stored data files representing the images. A pixel editing program allows the user to designate regions as areas of interest and name them for later programming reference. This is particularly useful in game design such as exploration games involving motion or movement of a viewer through, for example, a structure. The end user of the present invention controls the direction of viewing by moving a computer mouse, selecting a control button of a keypad or depressing keys of a keyboard in combination, as will be suggested herein, with a computer display for viewing an image per Figure 18. For example, a hot spot can be designated by clicking a mouse a predetermined number of times within the hot spot and then appropriate sound, text, or other image may be sequentially called and displayed by computer code associated with the hot spot.

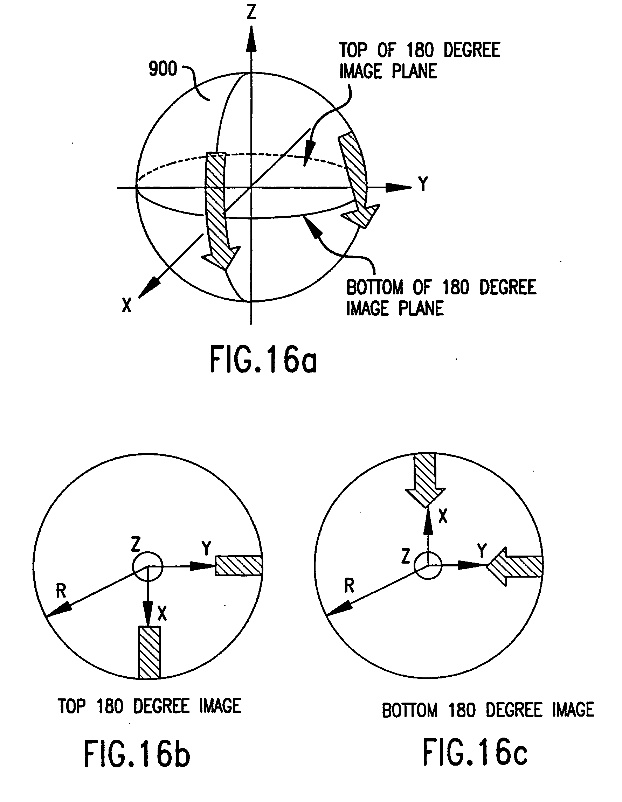

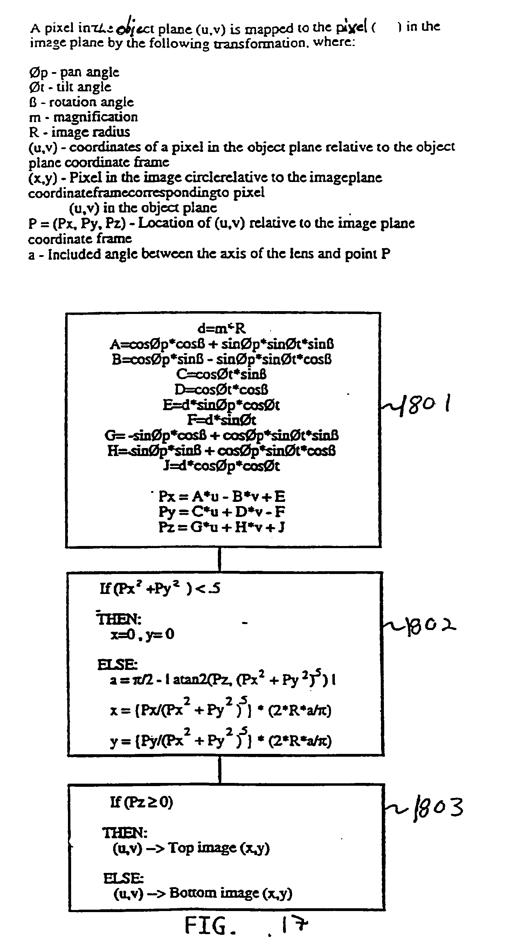

Figure 16 shows how a line 900 that traverses both hemispheres is represented in the data set that captures the images. Referring to Figures 16(b) and Figure 16(c), each hemisphere is represented by a circle, one designated top 180 degree image, the other designated bottom 180 degree image. Each has a radius R associated with the optics of the lens. This lens radius R (also referred to herein as an image radius R) is used to determine the amount of distortion correction that is needed by the transformation. A single hemisphere is treated as the top image plane and a second if it is present, is treated as the bottom plane in the image. Radius R is shown in the first equation of Figure 17 as d=mR.

The fundamental equations that are used to calculate the image plane addresses and the side of the image plane that is used for a given pixel is given in Figure 17. The user inputs the pan, tilt, rotation, and magnification by either keypad, mouse, touchscreen, computer control or other input interfaces 22, 23. These inputs along with the data information of image radius R is used to transform from the data in the image plane to the output for display on display 21 via the equations provided. Bilinear interpolation between known exact transformation addresses in the x and y directions (also known in the art as bilinear address approximation) or an equivalent process simplifies the calculations, thus improving the computational speed needed to implement the transformations. The checking for the z value determines which image file to obtain the pixel value from. Other assumptions may also be made to improve the computational speed of the algorithm. More importantly, Figure 17 provides a flowchart of the algorithm. As used in the flowchart, * means multiplication and cos and sin are the well known sine and cosine trigonometric functions. In step 1801, the input data provided by the user is manipulated to obtain Px, Py and Pz used later. In step 1802, the result of $Px^2 + Py^2$ is compared with .5, and if less than .5 in value, x and y are both 0. otherwise, a, x and y are given the values shown by the represented equations. Step 1803 determines which half of the sphere the object is in. If greater than 0, then it is in the top image, and if less, the bottom image given a top/bottom sphere example.

In summary, at least a single image or two images (one image plus its near exact opposite image) are captured having 180 degree fields of view. The captured image (or images) (if analog) is digitized via a scanner. The image could have been directly captured using a photo compact disc, digital camera or digital scanner. Then, the digitized image is processed to determine its border (for seam filtering), its center (the center of the sphere) and its radius (distance to the object plane). Also, during combination, the bottom image values are matched with nearly identical image values of the top image values to form the spherical image from the two hemispheres. The processed spherical image is then stored for use in content applications. Image files are then identified for hotspot correlation with names and description. Once the data file is correlated, the images can be linked together with hot spots and made to correspond with special sound effects, trigger the viewing of a motion picture, cause certain text to be displayed or graphics effects generated to create a multimedia title. The title having been created, the title is compiled. Then, the title can be distributed via CDROM, electronic distribution in real time or via data network. The viewer then can run applications software within the title to create an immersive imaging environment that can be selectively moved through. As a hot spot is entered, the program runs a link to the next spherical image or bubble, and so on, taking the viewer through the title according to the viewer's commands.

Referring to Figure 18, one user interface consists of a directional pointer which may be associated with a display. The arrows on the display are exemplary arrows representing the shape of a mouse command or cursor that can be displayed by a display driver and generator when in the depicted region. The pointer changes magnitude and direction based on the distance a cursor is located from the center of the display. A region in the center of the display supports magnification and minification. This interface is shown in Figure 18, but is by no means all of the possible means that can be used to control the direction of the view. Additional control input can be accomplished via joystick input, head tracking devices (as in head mount virtual reality displays), keyboard control and computer control. Rotation is preferably automatically corrected to maintain the viewer in horizontal relationship with the environment. Pan and tilt can be accomplished via other input means.

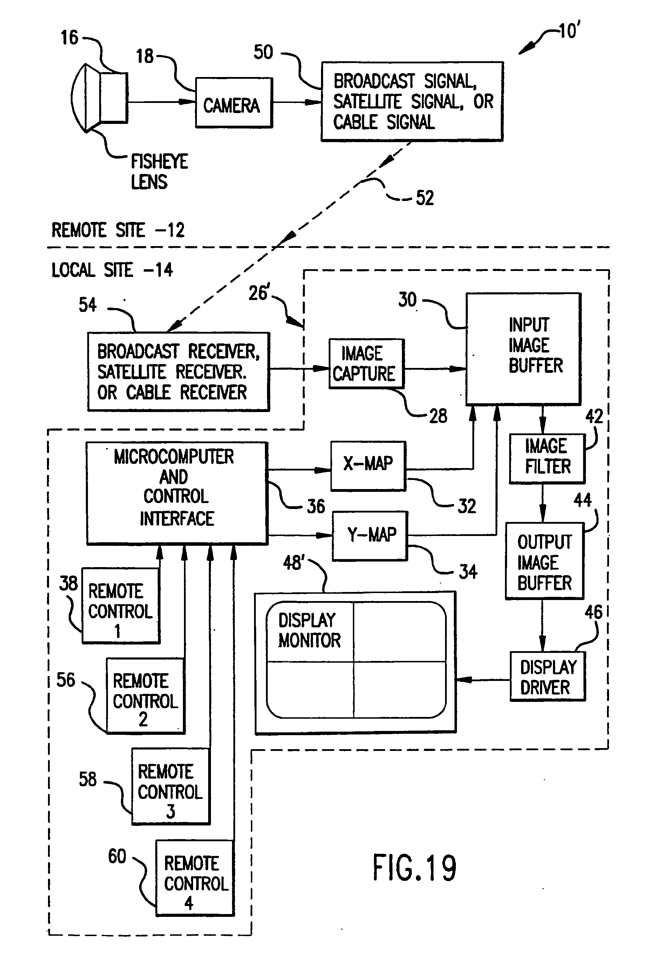

The invention can be incorporated into a system that allows multiple simultaneous users of the information to direct their view in any direction, independent of all other users as shown in Figure 19. The delivery of these image data, still or full motion video, can be accomplished via broadcast, cable, digital network such as Internet, or on transportable media such as CDROM, videotape, or laserdisc from a remote site 12 to a local site 14. For example, at a baseball game at a remote site, two back-to-back (oppositely directed) video cameras equipped with 180 degree lenses capture a spherical image. This spherical image is transmitted to multiple users at local locations. One viewer can direct their focus on the pitcher, another viewer simultaneously at another location can be viewing the catcher while another is viewing someone in the crowd. Each viewer is watching the same ball game in the way they wish to view that ball game.

Referring now to Figure 20, the present invention will be further explained in regard to one potential application. Picture a tour of a famous art museum. Prior to construction of such a tour, according to the principles of the present invention, spherical images (or bubbles) are captured in analog or digital form of the entire museum using the techniques in co-pending patent application serial no. 08/494,599, filed June 23, 1995. The photographer travels along an axis A (for example, a museum corridor) and captures image bubbles 1101-1105, for example, at predetermined intervals, for example, every ten to fifty feet. (Circles are used to represent spheres in Figure 20 to avoid drawing clutter). Present high grain (analog) or digital images can permit as high as (at least) seven times magnification. Thus, a user can focus their attention as they travel a museum corridor on an art object and zoom in on even details of the object. The zoom feature may be used to create an illusion of movement of an observer as they move through a bubble or from bubble to bubble. The faster the zoom, the faster would be the observer's velocity (simulating running). If the ceilings of the museum corridor are high and detail of the ceilings are to be captured and viewed, then, floating or flying can be simulated.

Bubble 1101, for example, will capture an image of painting 1100 hanging on a wall of the corridor. The bubble image 1101 captures the floor, the ceiling, any place one could possibly look. The photographer does not lose any portion of any possible picture. The photographer can follow the A axis and capture bubbles 1102, 1104 and 1105 or another corridor along the B axis, for example, to capture bubble 1103 upon arrival at the A/B junction. The bubbles are large enough to capture anything within it. The bubbles preferably are captured at predetermined intervals or distances and preferably overlap. The photographer captures each spherical view for the entire tour.

Later, these photographs are scanned or otherwise entered into a database for manipulation according to the present invention. Hemispherical images are combined as discussed above, preferably in the form of two opposite images (so that during a tour, the user can go back if they want to view something they may have missed). Now in bubble 1101, it may be appropriate to designate a hot spot when, using the interface of Figure 9, the user directs their view toward painting 1100. As earlier described, any distortion created by the fish eye lens capture of the image is corrected and a clear planar view of the painting 1100 is provided the user. The hot spot, for example, can trigger closed captioning or audible programs to describe the painting 1100. The user may trigger a gateway into a presentation on the artist and then return to the tour. This, as earlier described, is permitted through the use of "hot spot" linking in software to stored audio, graphics or other data for presentation. Another "hot spot" would be at the A/B axis (corridor) junction in sphere 1102. The user pointing their directional cursor in the direction of one corridor along the B axis will permit the user to move to the bubble 1103, and so on. In this manner, an entire tour of a museum may be put together.

Now, the end user of software according to the present invention may obtain access to a database over the Internet or other information highway and have the entire museum tour program database downloaded to their personal computer, television set top terminal or other decoder/presentation device. The program user may select the program from many such programs available to them. The terminal may store and forward pay television charges according to well known techniques to report a charge back to a central billing computer, if the tour program is a pay program, as will now be further discussed by way of example.

In accordance with yet another example, a program user may be standing in a corridor of the Smithsonian Air and Space Museum in Washington, D.C. While the museum tour may be provided free of charge, the tour user may wish to watch a video/audio performance at the "Langley Theater" which charges a $3.50 admission. Again, a "hot spot" may link the decision to a chargeable event and so permit the admission fee to be charged to the user. The acceptance of the pay event is stored in memory along with a means of payment, a code signifying the event's identity and program source. Via well known data return means, the program source (or billing computer) is signaled of the charge for the event and the identity of the viewer and means of payment.

From the foregoing description, it is or should be readily apparent that the described method of operation and apparatus permits a user to obtain a total immersive experience and that the disclosed system achieves the objectives sought. Of course, the foregoing description is that of preferred embodiments of the invention and various changes and modifications may be made without departing from the spirit and scope of the invention as defined by the appended claims. All of the above-referenced U.S. patents and patent applications referenced herein should be deemed to be incorporated by reference as to any subject matter believed to be essential to an understanding of the present invention.

Having thus described the aforementioned invention, we claim:

## Claims

1. A method for capturing a spherical image comprising the steps of:

   capturing a first hemispherical image via a first camera including a first hemispherical lens;
   capturing a second hemispherical image via a second camera including a second oppositely directed hemispherical lens; and,
   combining said first and second oppositely directed hemispherical images to create a spherical image.

2. The method according to claim 1 further including the step of transforming the spherical image to a perspective corrected spherical image.

3. The method according to claim 2, said transforming step occurring within a computer and said method further including the step of displaying the perspective corrected spherical image on a display of said computer.

4. A method for capturing and generating a spherical image comprising the steps of:

   capturing a first image via a camera including a lens having a field-of-view of at least 180°;
   creating a second image corresponding to a mirror image of the first image; and,
   combining said first and second images to create a spherical image.

5. The method according to claim 4 further including the step of transforming the spherical image to a perspective corrected spherical image.

6. The method according to claim 5, said transforming step occurring within a computer and said method including the step of displaying the perspective corrected spherical image on a display of said computer.

7. An apparatus for capturing a spherical image comprising:

   a first camera equipped with a first 180° or greater field-of-view lens, said first camera and said first lens directed in a first direction, said first camera capturing a first image;
   a second camera with a second 180° or greater field-of-view lens, said second camera and said second lens directed in a second direction opposite said first direction, said first and second cameras arranged in a back-to-back position, said second camera capturing a second image; and,
   a combining system for combining said first and second images into a formed image.

8. The apparatus according to claim 7, said first and second cameras are single-use cameras whose backs are attached to each other through separable locking devices.

9. The apparatus according to claim 7, said first image is a 180° or greater field-of-view image and said second image is a 180° or greater field-of-view image.

10. The apparatus according to claim 9, said formed image is a complete spherical image.

11. The apparatus of claim 7, said first and second hemispherical lenses are optically connected to said first and second cameras through reflective optics.

12. The apparatus according to claim 7, wherein said first and second cameras are still cameras.

13. The apparatus according to claim 7, wherein said first and second cameras are video cameras.

14. The apparatus according to claim 7, wherein said first and second cameras are motion picture cameras.

15. The apparatus according to claim 7, wherein said first and second cameras are linear scanning CID camera arrays.

**16.** The apparatus according to claim 7, wherein said first and second cameras are linear scanning CCD camera arrays.

**17.** The apparatus according to claim 7, wherein said first and second cameras are linear scanning CMOS APS camera arrays.

**18.** The apparatus according to claim 7, said first and second cameras including film exposed to said first and second images, said apparatus further comprising an optical-to-electrical converter converting said first and second images stored on said film into a form usable by said combining system.

**19.** The apparatus according to claim 7, said first and second hemispherical lenses connected to said first and second cameras though fiber optic lines.

**20.** The apparatus according to claim 7, said combining system for combining said first and second images further processes any overlap between said first and second hemispherical images to remove any edge distortion in creating said formed, spherical image.

**21.** An apparatus for capturing and forming a spherical image comprising:

a camera equipped with a 180° or greater field-of-view lens, said first camera capturing a first image;
a mirror image converter for converting said first image into a second image corresponding to a mirror image of the first image; and,
a combining system for combining said first and second images into a spherical image.

**22.** The apparatus of claim 21 where the camera is a single-use camera.

**23.** The apparatus of claim 21 including a transformer which transforms a selected portion of said spherical image to a perspective corrected spherical image.

**24.** The apparatus according to claim 23, said transformer disposed within a computer and containing hardwired perspective correction algorithms and said computer including a display for displaying said perspective corrected spherical image.

**25.** The apparatus according to claim 23, said transformer disposed within a computer, which contains perspective correction algorithms in software, and said computer including a display for displaying said perspective corrected spherical image.

**26.** A system for capturing a spherical image comprising:

a first hemispherical lens including a first image plane and a first optical axis, said first hemispherical lens directed in a first direction;
a second hemispherical lens, said second lens including a second optical axis and a second image plane, said second lens directed in a second direction opposite said first direction such that the first and second image planes fall between the first and second lenses and the first and second optical axes are collinear;
a first image capture device capturing an image from said first hemispherical lens;
a second image capture device capturing an image from said second hemispherical lens;
a combining system for combining said first and second images into a formed image.

**27.** The system according to claim 26, said first image is a hemispherical image and said second image is a hemispherical image.

**28.** The system according to claim 27, said formed image is a complete spherical image.

**29.** The apparatus according to claim 26, wherein said first and second cameras are still cameras.

**30.** The apparatus according to claim 26, wherein said first and second cameras are video cameras.

**31.** The apparatus according to claim 26, wherein said first and second cameras are motion picture cameras.

**32.** The apparatus according to claim 26, wherein said first and second cameras are linear scanning CID camera arrays.

**33.** The apparatus according to claim 26, wherein said first and second cameras are linear scanning CCD camera arrays.

**34.** The apparatus according to claim 26, wherein said first and second cameras are linear scanning CMOS APS camera arrays.

**35.** An apparatus for capturing a spherical image comprising:

a first hemispherical lens having a first image plane and a first optical axis, said first lens directed in a first direction;
a second hemispherical lens having a second image plane and a second optical axis, said second lens directed in a second direction opposite said first direction such that the first and second image planes fall between the first and second lenses and the first and second optical axes are collinear;
a camera capturing a first image from said first hemispherical lens and capturing a second image from said second hemispherical lens; and,
a combining system for combining said first and second images into a formed image.

**36.** A method of taking a single image captured with a lens having a field of view equal to 180 degrees and creating a 360 degree fully surrounding spherical visualization for an observer comprising the steps of

obtaining a first 180 degree image,
mirror imaging the first image,
combining the first and second images, and
storing said combined spherical image in memory,

wherein a further step comprises transforming a selected image at the seam between the first image and the second image into a planar image.

**37.** The method of claim 36 further comprising the preliminary step of digitizing the image data and the mirror imaging step comprises the step of axis reversal of image data to obtain mirror image data.

**38.** The method of claim 36 further comprising the preliminary step of digitizing the image data and the additional step of seam filtering pixel data at the border between the first and mirror image.

**39.** The method of claim 36 further comprising the step of designating active regions for subsequent programming reference.

**40.** The method of claim 36 further comprising the step of distortion and perspective correction of a selected portion using equations based on fisheye lens optical characteristics including its radius R.

**41.** A method of user interaction with a spherical image comprising the steps of accepting input pan, tilt, and magnification commands via an input interface.

**42.** A method according to claim 41 wherein said input interface includes a display and a directional cursor, the display including a magnification region.

**43.** A method according to claim 41, the interface selected from a mouse, a keyboard, a head tracking device, or a joystick, an observer traversing the spherical image without using any other input device and perspective correcting any selected portion thereof.

**44.** A method of user interaction according to claim 36 further comprising the step of linking to a new spherical image when a predetermined portion is selected.

**45.** A method of taking first and second images captured with a lens having a field of view equal to 180 degrees and creating a 360 degree fully-surrounding spherical visualization experience for an observer comprising the steps of

obtaining a first 180 degree image,
obtaining a second 180 degree image which is an opposing view from the first image,
combining the first and second images, and
storing said combined spherical image in memory,

wherein a further step comprises transforming a selected image at the seam between the first image and the second image into a planar image.

46. The method of claim 45 further comprising the preliminary step of digitizing the image data and the additional step of seam filtering pixel data at the border between the first and mirror image.

47. The method of claim 45 further comprising the step of designating active regions for subsequent programming reference.

48. A method of user interaction according to claim 45 further comprising the step of linking to a new spherical image when a predetermined portion is selected.

49. The method of creating a 360 degree visualization of claim 45 wherein the image transformation comprises distortion and perspective correction according to equations based on fisheye lens optical characteristics including its radius R.

50. The method of creating a 360 degree visualization of claim 45 further including the step of accepting pan, tilt, and magnification commands via an input interface.

51. A method according to claim 50 wherein said input interface includes a display and a directional cursor, the display including a magnification region.

52. A method according to claim 50 wherein said input interface is selected from a mouse, keyboard, head tracking device, or joystick, allowing the observer to traverse the entire sphere without using any other input device.

53. A method for distortion and perspective correction using equations based on fisheye lens optical characteristics including its radius R.

54. A method of user interaction that allows the observer to input pan, tilt, and magnification commands via an input interface selected from a mouse, keyboard, head tracking device, or joystick allowing the observer to traverse the entire sphere without using any other input device.

55. A method of determining an image portion to be displayed at the intersection of two hemispherical images comprising the steps of identifying a border between the two hemispherical images and seam filtering at the border in real time, eliminating a halo effect by means of the seam filtering.

56. A method of creating a mirror image to complete a spherical image when only one hemisphere is used by a user for interactive viewing comprising the steps of

creating a mirror image of a first 180 degree image and
combining the first and mirror images into the complete spherical image.

57. A method of distribution of spherical images in a manner that allows simultaneous and independent interaction at each receiving location comprising the steps of

receiving at least a captured hemispherical image at a local location and
selecting an image portion of the received image for display wherein said image portion is located at an edge between first and second opposite hemispherical images.

58. The method of image distribution of claim 57 further comprising the step of

generating a mirror image of the received hemispherical image.

**59.** The method of image distribution of claim 57 further comprising the step of

receiving a second hemispherical image captured from the opposite direction from the first.

**60.** Apparatus for the interactive display of a portion of a spherical image comprising

memory for storing data representing at least one 180 degree image,
an input interface for selecting the spherical image portion and
a controller, coupled to the memory and to the interface, for transforming the selected image to a planar image wherein said selected image is at the border of the 180 degree image.

**61.** Apparatus for the interactive display of a spherical image portion as in claim 60 further comprising

a seam filter for filtering data at the border between a first image and its mirror image.

**62.** Apparatus for the interactive display of a spherical image portion as in claim 60 wherein said input interface comprises a display providing a region for magnification and a directional cursor.

**63.** Apparatus for the interactive display of a spherical image as in claim 61 wherein said memory additionally stores data representing a second 180 degree image which is an opposing view from said first image.

**64.** Apparatus as in claim 63 further comprising

a seam filter for filtering data at the border between said first image and said second 180 degree image.

**65.** Apparatus as in claim 63 wherein said memory further stores data representative of a picture portion, the picture portion data linked to other data in memory comprising one of an audio program, a captioning program, a video program or a graphics program.

**66.** Apparatus as in claim 63 wherein said memory further stores data representative of a picture portion, the picture portion data linked to program data and fee data associated with the program data.

**67.** Apparatus as in claim 66 further comprising fee forward circuitry, responsive to the controller for forwarding program fee data to a pay program source.

FIG. 1

FIG. 2

EP 1 580 986 A2

FIG. 3

EP 1 580 986 A2

FIG. 4

FIG. 5A

EP 1 580 986 A2

EP 1 580 986 A2

203

201 — CAMERA

FIRST
SPHERICAL
IMAGE

901

MIRROR
IMAGE
CONVERTER

216 — HEMISPHERICAL-
TO-SPHERICAL
IMAGE CONVERTER

FORMED
SPHERICAL
IMAGE

F I G. 5B

FIG. 6A

FIG. 6B

IMAGE 2

206

208

IMAGE 1

207

205

FIG. 7A

FORMED SPHERICAL IMAGE

209

206

207, 208

SEAM

205

FIG. 7B

FIG. 8

EP 1 580 986 A2

FIG. 9A

FIG. 9B

EP 1 580 986 A2

FIG. 11

FIG. 10

EP 1 580 986 A2

VIEWING DIRECTION

Z

OBJECT
PLANE

v

u

PIXEL IN
OBJECT
PLANE
(u,v)

pz

py

px

TOP OF 180 DEGREE
IMAGE PLANE

Y

500

PIXEL IN
IMAGE PLANE
(x,y)

X

BOTTOM OF
180 DEGREE
IMAGE PLANE

## FIG.12

IMAGE PLANE

Y

Y

R

X

Z

r

V

U

X

DOV

OBJECT PLANE

## FIG.13

34

CAMERA
ORIENTATION FOR
TOP IMAGE

FIG.14

EP 1 580 986 A2

USP 5,185,667 WIDE ANGLE "THIN" LENS
ASSUMPTION

# FIG.15A

FISHEYE LENS ASSUMPTION THAT CORRECTS
FOR EDGE CONSIDERATIONS

CORRECTION TO THE LENS ASSUMPTIONS FOR TRUE FISHEYE LENS
REPRESENTATION

# FIG.15B

Z

900

TOP OF 180 DEGREE
IMAGE PLANE

Y

X

BOTTOM OF 180 DEGREE
IMAGE PLANE

FIG.16a

Z

Y

R

X

TOP 180 DEGREE IMAGE

FIG.16b

X

Z

Y

R

BOTTOM 180 DEGREE IMAGE

FIG.16c

A pixel in the object plane (u,v) is mapped to the pixel ( ) in the image plane by the following transformation, where:

Øp - pan angle
Øt - tilt angle
ß - rotation angle
m - magnification
R - image radius
(u,v) - coordinates of a pixel in the object plane relative to the object plane coordinate frame
(x,y) - Pixel in the image circle relative to the image plane coordinate frame corresponding to pixel
(u,v) in the object plane
P = (Px, Py, Pz) - Location of (u,v) relative to the image plane coordinate frame
a - Included angle between the axis of the lens and point P

$$d = m*R$$
$$A = \cos Øp * \cos ß + \sin Øp * \sin Øt * \sin ß$$
$$B = \cos Øp * \sin ß - \sin Øp * \sin Øt * \cos ß$$
$$C = \cos Øt * \sin ß$$
$$D = \cos Øt * \cos ß$$
$$E = d * \sin Øp * \cos Øt$$
$$F = d * \sin Øt$$
$$G = -\sin Øp * \cos ß + \cos Øp * \sin Øt * \sin ß$$
$$H = \sin Øp * \sin ß + \cos Øp * \sin Øt * \cos ß$$
$$J = d * \cos Øp * \cos Øt$$

$$Px = A*u - B*v + E$$
$$Py = C*u + D*v - F$$
$$Pz = G*u + H*v + J$$

~1801

If $(Px^2 + Py^2) < .5$

THEN:
   $x = 0$, $y = 0$

ELSE:
   $a = \pi/2 - |atan2(Pz, (Px^2 + Py^2)^{.5})|$

   $x = \{Px/(Px^2 + Py^2)^{.5}\} * (2*R*a/\pi)$

   $y = \{Py/(Px^2 + Py^2)^{.5}\} * (2*R*a/\pi)$

~1802

If $(Pz \geq 0)$

THEN:
   (u,v) --> Top image (x,y)

ELSE:
   (u,v) --> Bottom image (x,y)

~1803

FIG. 17

FIG.18

FIG.19

FIG.20